(19) **Europäisches Patentamt**
**European Patent Office**
**Office européen des brevets**

(11) **EP 4 617 071 A1**

(12) **EUROPEAN PATENT APPLICATION**

(43) Date of publication:
**17.09.2025 Bulletin 2025/38**

(51) International Patent Classification (IPC):
**B41J 2/21** (2006.01)    **G06K 15/02** (2006.01)

(21) Application number: **25159399.2**

(22) Date of filing: **21.02.2025**

(52) Cooperative Patent Classification (CPC):
**B41J 2/2146; B41J 2/2114; B41J 2/2117;**
**B41J 2/2139; B41J 2/2142; B41J 11/00214;**
B41J 2203/01; G06K 15/1874

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.03.2024 JP 2024040236**

(71) Applicant: **SCREEN Holdings Co., Ltd.**
**Kyoto-shi, Kyoto 602-8585 (JP)**

(72) Inventors:
• **YONEYA, Kazuaki**
**Kyoto, 602-8585 (JP)**
• **IKEDA, Yusaku**
**Kyoto, 602-8585 (JP)**
• **SAKAI, Tomoyuki**
**Kyoto, 602-8585 (JP)**

(74) Representative: **Kilian Kilian & Partner mbB**
**Zielstattstraße 23a**
**81379 München (DE)**

(54) **PRINTING APPARATUS AND PRINTING METHOD**

(57)    For each individual correction area to be corrected so as to suppress image defects caused by dot missing in the printed image to be formed on the base material by the inkjet printing apparatus, it is determined whether or not to use a correction aid ink (white or transparent ink) for the correction of that individual correction area (S121, S141). A correction execution area is determined by removing pixel rows corresponding to a predetermined thinning number (e.g. one pixel row) from the opposite ends of an individual correction area determined to be corrected using the correction aid ink (S123, S143). The printing data is corrected such that a color ink is ejected in the correction executed area to form the printed image after the correction aid ink is ejected (S128, S148). Based on such corrected printing data, the printed image is formed on the base material.

*FIG. 17*

**Description**

BACKGROUND OF THE INVENTION

1. Field of the Invention

The present invention relates to a printing apparatus equipped with inkjet heads (printheads) including numerous inkjet nozzles, and a printing method using the same.

2. Description of the Related Art

Conventionally, an inkjet-type printing apparatus (hereinafter referred to as an "inkjet printing apparatus") that perform printing by ejecting ink onto printing media such as print paper, are known. In general, an inkjet printing apparatus perform printing using water-based ink. However, in recent years, there has been active development of an inkjet printing apparatus that performs printing using UV ink (ultraviolet-curable ink), for example, for label printing. In such an inkjet printing apparatus using UV ink, the UV ink is ejected by an inkjet head and cured by UV light (ultraviolet) irradiation to be fixed to a base material serving as a printing medium.

Incidentally, in an inkjet printing apparatus, there are individual variations among the nozzles in the inkjet head. Therefore, even when ink is ejected through these numerous nozzles in accordance with the same drive signal, the amount of ink ejected varies among the nozzles. In this condition, printing does not result in a high-quality print product. Accordingly, density uniformity correction, which is printing data density correction to ensure that all nozzles eject ink uniformly, is performed.

Furthermore, the inkjet printing apparatus may experience ink ejection failure due to factors such as ink solidification resulting from prolonged inactivity. Such failure can lead to missing dots in printed images, i.e., dot missing, corresponding to nozzles in an ejection failure state (referred to below as "defective nozzles"). Therefore, nozzle-defect correction, which is printing data density correction to ensure that ink that should be ejected through the defective nozzles is ejected through other nozzles (typically, those adjacent to the defective nozzles), is performed. Note that Japanese Laid-Open Patent Publication No. 2014-188785 discloses an example of nozzle-defect correction.

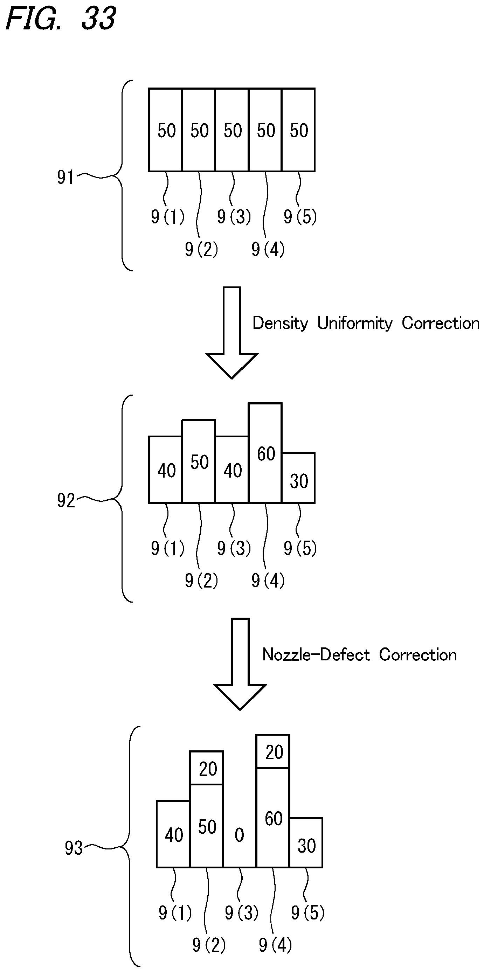

Density uniformity correction and nozzle-defect correction will be further described with reference to FIG. 33. Here, focus will be placed on five pixels 9(1) to 9(5) corresponding to five nozzles. These five pixels 9(1) to 9(5) are assumed to undergo single-color printing using ink of the same color ejected through the five nozzles. Moreover, printing data is assumed to be generated by RIP processing and designate a density of 50 (dot %) for all five pixels 9(1) to 9(5), as indicated in the portion denoted by reference numeral 91. Density uniformity correction is performed to correct the densities of five pixels 9(1) to 9(5), for example, as indicated in the portion denoted by reference numeral 92. In this example, the density of pixel 9(1) is corrected to 40, which is 4/5 of 50, because the nozzle corresponding to pixel 9(1) ejects 5/4 times the ink ejected through the nozzle corresponding to pixel 9(2) in accordance with the same drive signal. In addition, the density of pixel 9(4) is corrected to 60, which is 6/5 of 50, because the nozzle corresponding to pixel 9(4) ejects 5/6 times the ink ejected through the nozzle corresponding to pixel 9(2) in accordance with the same drive signal. In this example, of the five nozzles, the nozzle corresponding to pixel 9(3) is a defective nozzle. Therefore, nozzle-defect correction is performed on the data representing the portion denoted by reference numeral 92. As a result, the densities of five pixels 9(1) to 9(5) are corrected as indicated in the portion denoted by reference numeral 93. In this regard, the density of pixel 9(3) is 40 before nozzle-defect correction, and therefore 20 is added to the density of pixel 9(2) and also to the density of pixel 9(4). That is, the density of pixel 9(2) is corrected to 70, and the density of pixel 9(4) is corrected to 80.

Density uniformity correction and nozzle-defect correction, as described above, suppress the occurrence of image defects caused by individual variations among nozzles and defective nozzles (such as density decreases that appear as streaks due to dot missing).

However, in cases where there is a defective nozzle, even when nozzle-defect correction is performed to ensure that the amount of ink that should originally be ejected through the defective nozzle is compensatorily ejected by other nozzles, the resulting print product may still not be defect-free to an acceptable extent. In particular, when a nozzle corresponding to a region undergoing single-color, high-density printing malfunctions, the dot size of ink ejected through other nozzles tends to be insufficient to rectify image defects due to dot missing. In this manner, conventional nozzle-defect correction may not result in print products of sufficient quality, depending on the images being printed.

Furthermore, Japanese Laid-Open Patent Publication No. 2019-155593 describes a printing method that compensates for dot missing by ejecting white or clear (transparent) ink as an induction ink at the location of dot missing caused by a defective (or malfunctioning) nozzle. This publication also describes an embodiment in which the amount of induction ink to be ejected at the location of dot missing is increased with the amount of ink that should be ejected through a defective nozzle at pixels neighboring the location of dot missing. This embodiment is intended to more effectively compensate for dot missing even in regions that undergo high-density printing.

However, when printing an image that includes narrow linear patterns about several pixels wide, such as characters or barcodes, such a printing method designed to compensate for dot missing using white or transparent ink as an induction ink might not produce a satisfactory printed image, even if the occurrence of image defects caused by dot missing is suppressed.

SUMMARY OF THE INVENTION

Thus, there is demand for enabling an inkjet printing apparatus to form a satisfactory printed image while compensating for image defects caused by dot missing even when printing an image that includes narrow linear patterns such as characters or barcodes.

One aspect of the present invention provides a printing apparatus for forming a printed image on a printing medium by ejecting ink onto the printing medium based on printing data, including:

a recording portion configured to eject a plurality of types of inks onto the printing medium, the plurality of types of inks including a first ink and a correction aid ink;

a transportation portion configured to move the printing medium relative to the recording portion;

an ejection control portion configured to control the ejection of the plurality of types of inks by the recording portion; and

a correction region determination portion configured to determine a correction region in the printed image to be formed on the printing medium, the correction region consisting of one or more continuous areas to be corrected using the correction aid ink, wherein,

the transportation portion includes a mechanism configured to move the printing medium relative to the recording portion in a predetermined transportation direction perpendicular to a width direction of the printing medium and parallel to the printing medium,

the recording portion includes:

a first inkjet head including a plurality of ink ejection ports for ejecting the first ink; and

a correction aid inkjet head including a plurality of ink ejection ports for ejecting the correction aid ink, the correction aid inkjet head being disposed upstream of the first inkjet head when viewed in the transportation direction,

the first ink has a larger wetting spread range on the printing medium when the first ink is ejected onto the correction aid ink on the printing medium than when the first ink is ejected directly onto the printing medium,

when any continuous area included in the correction region contains more pixels in the transportation direction than twice a predetermined thinning number, the correction region determination portion determines a correction execution area for the any continuous area by removing pixel rows corresponding to the thinning number from each of opposite ends of the any continuous area in the transportation direction, and

the ejection control portion controls the first inkjet head and the correction aid inkjet head to eject the correction aid ink into the correction execution area before ejecting the first ink into the correction execution area to form the printed image.

In the above aspect of the invention, the printing apparatus is equipped with the correction aid inkjet head configured to eject the correction aid ink. When viewed in the transportation direction by the transportation portion, the correction aid inkjet head is disposed upstream of the first inkjet head, which ejects the first ink to form the printed image on the printing medium. The correction region determination portion determines the correction region to be corrected using the correction aid ink in the printed image to be formed on the printing medium. Typically, white ink is used as the correction aid ink when the printing medium is white, while transparent ink is used when the printing medium is not white. However, transparent ink may also be used when the printing medium is white. The correction region determined by the correction region determination portion includes one or more continuous areas (referred to below as "individual correction areas", as in later sections). When any individual correction area included in the correction region contains more pixels in the transportation direction than twice the predetermined thinning number, the correction execution area is determined by removing pixel rows corresponding to the thinning number from opposite ends (for example, one or two pixel rows from each end) of the individual correction area in the transportation direction. When the printed image is formed on the printing medium based on the printing data, the correction aid ink is ejected into the correction execution area before the first ink is ejected to form the printed image. The first ink has a larger wetting spread range on the printing medium when the first ink is ejected onto the correction aid ink on the printing medium than when the first ink is ejected directly onto the printing medium. Accordingly, the first ink ejected into the correction execution area forms a larger dot size on the printing medium than usual. Thus, even when there is a malfunction in the nozzles corresponding to regions that undergo high-density printing, it is possible to correct image defects caused by dot missing and effectively mitigate the reduction in printed image quality caused by the defective nozzles. Moreover, for the correction execution area resulting from removing pixel rows corresponding to the thinning number from opposite ends of each continuous area (i.e., each individual correction area) in the transportation direction within the correction region, the correction aid ink is used for correction, and therefore the wetting spread range of the first ink ejected into the individual correction area can be inhibited from exceeding the boundaries of the individual correction area. Thus, even when printing an image that includes narrow linear patterns such as characters or barcodes, it is possible to mitigate the reduction in printed image quality due to ink bleeding caused by the use of the correction aid ink.

In the above aspect of the invention, it is preferred that the correction region determination portion determines the correction region based on a position of a defective ink ejection port that is an ink ejection port having ejection failure among the ink ejection ports included in the first inkjet head.

In the above configuration, it is further preferred that the correction region determination portion determines the correction region based on the printing data in such a manner to include a rectangular continuous area defined by a transportation direction range and a width direction range, the transportation direction range being determined by consecutive missing pixels in the transportation direction, the missing pixels being pixels that should have been formed on the printing medium by ink ejected through the defective ink ejection port, the width direction range being determined by a predetermined number of adjacent pixels aligned in the width direction with a missing pixel centered.

In addition, the printing apparatus of the above aspect of the present invention may be further configured as follows.

In the above aspect of the invention, the recording portion further includes a second inkjet head including a plurality of ink ejection ports for ejecting a second ink, the second inkjet head being disposed downstream of the correction aid inkjet head when viewed in the transportation direction,

the second ink has a larger wetting spread range on the printing medium when the second ink is ejected onto the correction aid ink on the printing medium than when the second ink is ejected directly onto the printing medium,

if the first and second inks are ejected so as to mix, the wetting spread ranges of the first and second inks on the printing medium are larger when the first and second inks are ejected onto the correction aid ink on the printing medium than when the first and second inks are ejected directly onto the printing medium, and

the ejection control portion controls the second inkjet head and the correction aid inkjet head to eject the correction aid ink into the correction execution area before ejecting the second ink into the correction execution area to form the printed image.

Another aspect of the present invention provides a printing method for forming a printed image on a printing medium based on printing data using a printing apparatus equipped with a recording portion configured to eject a plurality of types of inks onto the printing medium and a transportation portion configured to move the printing medium relative to the recording portion, the method including:

ejecting one of the plurality of types of inks as a first ink from the recording portion onto the printing medium to form the printed image;

ejecting another one of the plurality of types of inks as a correction aid ink from the recording portion onto the printing medium; and

determining a correction region in the printed image to be formed on the printing medium, the correction region consisting of one or more continuous areas to be corrected using the correction aid ink, wherein,

the transportation portion includes a mechanism configured to move the printing medium relative to the recording portion in a predetermined transportation direction perpendicular to a width direction of the printing medium and parallel to the printing medium,

the first ink has a larger wetting spread range on the printing medium when the first ink is ejected onto the correction aid ink on the printing medium than when the first ink is ejected directly onto the printing medium,

when any continuous area included in the correction region contains more pixels in the transportation direction than twice a predetermined thinning number, in the determining the correction region, a correction execution area for the any continuous area is determined by removing pixel rows corresponding to the thinning number from each of opposite ends of the any continuous area in the transportation direction, and

in the ejecting the correction aid ink, the correction aid ink is ejected into the correction execution area before the first ink is ejected into the correction execution area to form the printed image.

The above another aspect of the invention achieves effects similar to those of the foregoing aspect of the invention.

These and other objects, features, modes, and effects of the invention will become more apparent from the following detailed description of the invention with reference to the accompanying drawings.

BRIEF DESCRIPTION OF THE DRAWINGS

FIG. 1 is an overall configuration diagram of a printing system according to an embodiment of the present invention;
FIG. 2 is a schematic diagram illustrating a configuration example of an inkjet printing apparatus in the embodiment;
FIG. 3 is a plan view schematically illustrating the configuration of a recording portion in the embodiment;
FIG. 4 is a plan view illustrating a configuration example of an ink ejection surface of an inkjet head in the embodiment;
FIG. 5 is a diagram for describing the arrangement of nozzles in a head module in the embodiment;
FIG. 6 is a block diagram illustrating the hardware configuration of a print controller in the embodiment;
FIG. 7 is a diagram outlining white correction in the embodiment;
FIG. 8 consists of a diagram (A) for describing ink ejection where white correction is performed in a single-color region in the embodiment, and a diagram (B) for describing ink ejection where white correction is performed in a mixed-color region in the embodiment;
FIG. 9 is a diagram illustrating an example of experimental results for wetting spread of color inks on a film base material;
FIG. 10 consists of diagrams (A) and (B) for describing a method for obtaining a determination criterion value for the necessity of white correction to rectify an image defect in the single-color region caused by a defective nozzle in the embodiment;
FIG. 11 consists of diagrams (A), (B), and (C) for describing a method for obtaining determination criterion values for the necessity of white correction to rectify an image defect in the mixed-color region caused by a defective nozzle in the embodiment;
FIG. 12 is a diagram outlining transparent correction in the embodiment;
FIG. 13 consists of a diagram (A) for describing ink ejection where transparent correction is performed on the single-color region in the embodiment, and a diagram (B) for describing ink ejection where transparent correction is performed on the mixed-color region in the embodiment;
FIG. 14 illustrates a word consisting of two Kanji characters as an example of an object to be printed in order to describe image defects caused by dot missing due to defective nozzles in the printed image of characters.
FIG. 15 is an illustration for describing the image defects caused by dot missing due to defective nozzles in the printed image of characters;
FIG. 16 is an illustration for describing a problem that occurs when white correction is performed to suppress the occurrence of image defects caused by dot missing due to defective nozzles in the printed image of characters;
FIG. 17 is an illustration for describing an end thinning process for determining correction execution areas;
FIG. 18 illustrates an example of a printed image resulting from printing characters with white correction involving the end thinning process in the embodiment;
FIG. 19 is a block diagram illustrating in detail the functional configuration of a density correction process section in the embodiment.
FIG. 20 is a diagram illustrating an example of a template for white correction in the embodiment;
FIG. 21 is a diagram for describing generation of a correction pattern in the embodiment;
FIG. 22 is another diagram for describing the generation of the correction pattern in the embodiment;
FIG. 23 is a diagram illustrating another example of the white correction template in the embodiment;
FIG. 24 is a diagram illustrating still another example of the white correction template in the embodiment;
FIG. 25 is a diagram showing yet another example of the white correction template in the embodiment;
FIG. 26 is a flowchart for describing the procedure for density correction process in the embodiment;
FIG. 27 is a block diagram illustrating in detail the functional configuration of a density correction process section in a first variant of the embodiment;
FIG. 28 is a flowchart for describing the procedure for density correction process in the first variant of the embodiment;
FIG. 29 is a block diagram illustrating in detail the functional configuration of a density correction process section in a second variant of the embodiment;
FIG. 30 is a flowchart for describing the procedure for density correction process in the second variant of the embodiment;
FIG. 31 is a diagram outlining yellow correction in a third variant of the embodiment;
FIG. 32 is a diagram for describing ink ejection in a region subjected to yellow correction in the third variant of the embodiment;
FIG. 33 is a diagram for describing density uniformity correction and nozzle-defect correction in conventional example.

DETAILED DESCRIPTION OF THE INVENTION

Hereinafter, an embodiment of the present invention will be described with reference to the accompanying drawings.

<1. Overall Configuration of the Printing System>

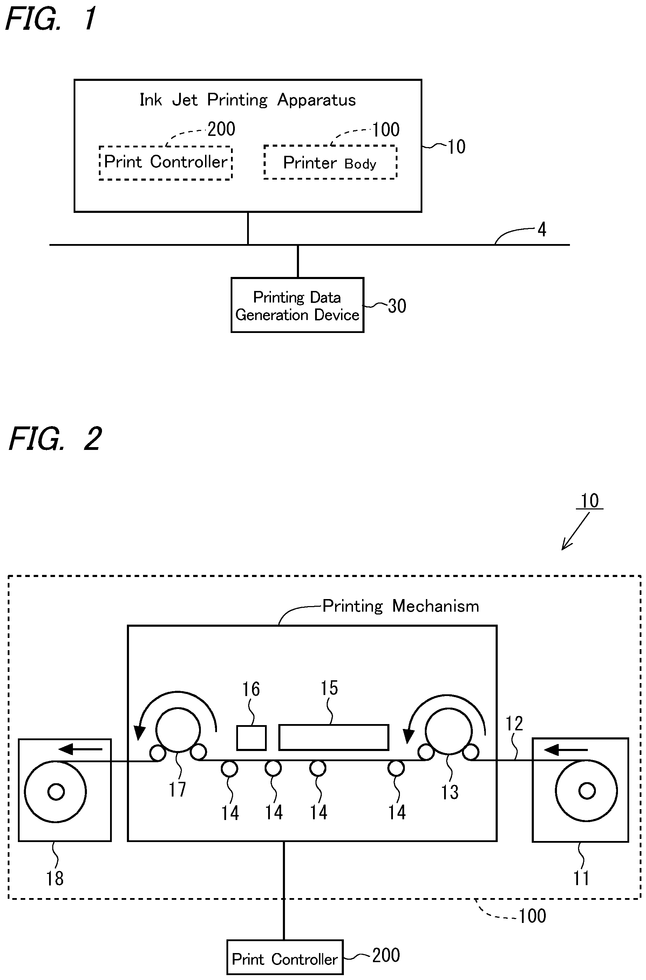

FIG. 1 is an overall configuration diagram of a printing system according to the embodiment of the present invention. This printing system includes an inkjet printing apparatus 10 and a printing data generation device 30. The inkjet printing apparatus 10 and the printing data generation device 30 are connected to each other via a communication line 4. The printing data generation device 30 generates printing data by performing RIP processing or suchlike on manuscript data in the form of, for example, a PDF file. The printing data contains respective density data for a plurality of color inks. The printing data generation device 30 transmits the generated printing data to the inkjet printing apparatus 10 via the communication line 4. Based on the printing data transmitted by the printing data generation device 30, the inkjet printing apparatus 10 performs printing by ejecting ink onto a base material, such as film or print paper, which serves as a printing medium, without using a printing plate. In this regard, the present embodiment employs UV ink (ultraviolet-curable ink) as printing ink. The inkjet printing apparatus 10 includes a printer body 100 and a print controller 200 for controlling the operation of the printer body 100.

<2. Configuration of the Inkjet Printing Apparatus>

FIG. 2 is a schematic diagram illustrating a configuration example of the inkjet printing apparatus 10. As described above, the inkjet printing apparatus 10 includes the printer body 100 and the print controller 200. The printer body 100 includes a base material feeding portion 11 for supplying a base material 12, a first drive roller 13 for transporting the base material 12 into a printing mechanism, a plurality of support rollers 14 for transporting the base material 12 within the printing mechanism, a recording portion 15 for recording an image on the base material 12 by ejecting ink onto the base material 12 and curing the ink, an imaging portion 16 for capturing the printed image (i.e., the resultant image on the base material 12 after printing), a second drive roller 17 for ejecting the base material 12 from inside the printing mechanism, and a base material winding portion 18 for winding the base material 12 after printing. As will be described later, the recording portion 15 includes inkjet heads for ejecting ink and ultraviolet light-emitting diode arrays (referred to below as UV-LED arrays) for curing the ink. The print controller 200 controls the operation of the printer body 100 as configured above. Note that the first drive roller 13, the support rollers 14, and the second drive roller 17 collectively serves as a transportation portion.

Incidentally, in the present embodiment, an inspection chart used for checking the state of nozzles in the inkjet heads is printed before executing the printing of a desired print product. The imaging portion 16 captures the resultant printed image of the inspection chart to obtain imaging data, which is then sent to the print controller 200. Thereafter, the print controller 200 performs a density correction process, which will be described later, based on the imaging data.

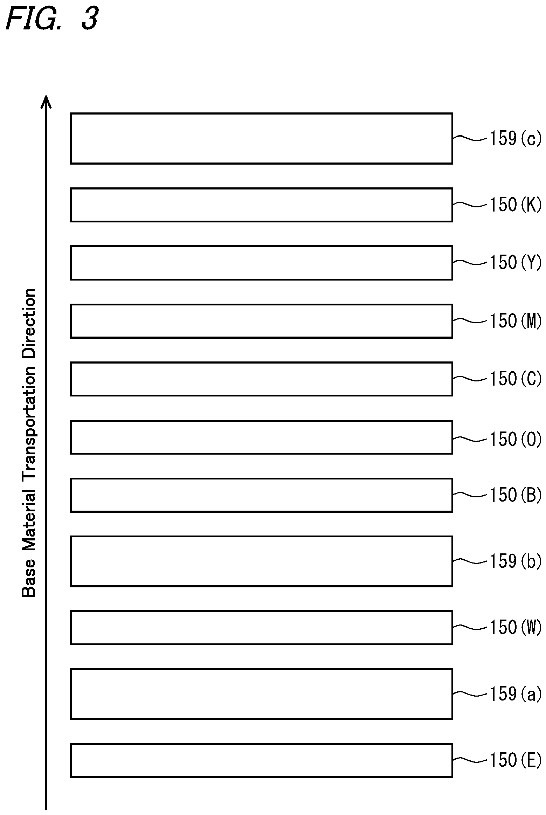

FIG. 3 is a plan view schematically illustrating the configuration of the recording portion 15 in the present embodiment. The recording portion 15 includes the inkjet heads 150 for ejecting ink onto the base material 12 and the UV-LED arrays 159 for curing the ink through ultraviolet irradiation. More specifically, the recording portion 15 is configured with the inkjet head 150(W) for ejecting white ink onto the base material 12, the UV-LED array 159(b) for curing the white ink through ultraviolet irradiation, the inkjet heads 150(B), 150(O), 150(C), 150(M), 150(Y), and 150(K) for ejecting blue, orange, cyan, magenta, yellow, and black inks, respectively, onto the base material 12, the UV-LED array 159(c) for curing these color inks (i.e., blue, orange, cyan, magenta, yellow, and black) through ultraviolet irradiation, the inkjet head 150(E) provided as a reserve, and the UV-LED array 159(a) for curing ink ejected onto the base material 12 by the inkjet head 150(E), through ultraviolet irradiation. In the present embodiment, the inkjet head 150(E) is used to eject transparent ink. The white inkjet head 150(W) and the transparent inkjet head 150(E) are disposed upstream of the color inkjet heads 150(B), 150(O), 150(C), 150(M), 150(Y), and 150(K) when viewed in the transportation direction of the base material 12 (referred to below simply as a "transportation direction").

In the present embodiment, the transparent inkjet head 150(E) and the white inkjet head 150(W) are selectively used depending on the type of base material 12 used for printing (i.e., whether the base material 12 is white or not). More specifically, when the base material 12 used for printing is white, the inkjet head 150(W) ejects white ink onto the base material 12. In this case, the inkjet head 150(E) does not eject transparent ink onto the base material 12. On the other hand, when the base material 12 used for printing is not white, the inkjet head 150(E) ejects transparent ink onto the base material 12. In this case, the inkjet head 150(W) does not eject white ink onto the base material 12.

The base material 12, serving as a printing medium, is transported from the bottom to the top in FIG. 3. Initially, either transparent or white ink is ejected onto the base material 12. Thereafter, the ejected ink is cured by the UV-LED array 159(a) or 159(b) corresponding to the transparent or white ink, respectively. Next, blue, orange, cyan, magenta, yellow, and black inks are sequentially ejected onto the base material 12 and then cured by the UV-LED array 159(c). Note that when white ink is ejected onto the base material 12 as a result of white correction, which will be described later, the UV-LED array 159(b) does not cure the white ink. Therefore, when white correction is performed, the color inks are ejected onto the uncured white ink. Moreover, when transparent ink is ejected onto the base material 12 by performing transparent correction, which will be described later, the UV-LED array 159(a) does not cure the transparent ink. Therefore, when transparent correction is performed, the color inks are also ejected onto the uncured transparent ink.

In the present embodiment, two or more inkjet heads among the inkjet heads 150(C), 150(M), 150(Y), 150(K), 150(O), and 150(B), which eject inks other than white and transparent inks (i.e., process-color and spot-color inks) serve as first and second inkjet heads, either the inkjet head 150(W) or 150(E) serves as a correction aid inkjet head, the UV-LED array 159(c) serves as a first ultraviolet irradiation portion, and either the UV-LED array 159(a) or 159(b) serves as a second ultraviolet irradiation portion.

It should be noted that the configuration of the recording portion 15 shown in FIG. 3 is merely illustrative, and the present invention is not limited to this. For example, the recording portion 15 may be configured without the inkjet head 150(B) for ejecting blue ink or the inkjet head 150(O) for ejecting orange ink.

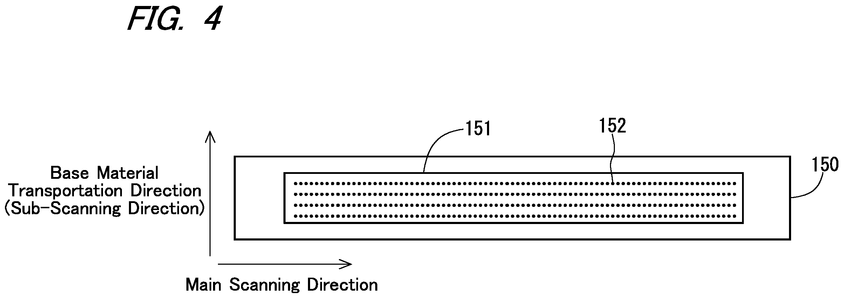

FIG. 4 is a plan view illustrating a configuration example of an ink ejection surface of one inkjet head 150. The inkjet head 150 includes a rectangular head module 151. The head module 151 has numerous nozzles 152 serving as ink ejection ports. In the example shown in FIG. 4, the head module 151 is shaped as one rectangle, but this is not limiting. Various configurations can be employed using a plurality of parallelogram-shaped or trapezoidal head modules. Note that since each nozzle corresponds to an ink ejection port, a defective nozzle, as described earlier, refers to a defective ink ejection port.

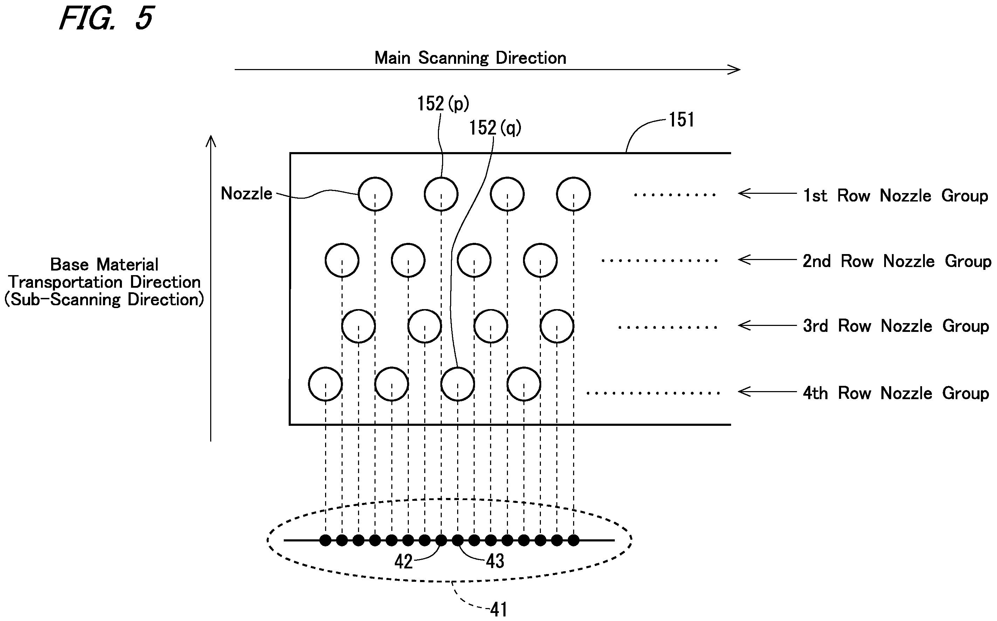

FIG. 5 is a diagram for describing the arrangement of the nozzles 152 in the head module 151. Typically, in the head module 151, the nozzles are arranged in rows in a main scanning direction (width direction of the base material 12), with each row constituting a nozzle group. In the example shown in FIG. 5, the head module 151 includes four rows or groups of nozzles. In FIG. 5, reference numeral 41 denotes a portion schematically showing landing positions of ink ejected by the nozzles 152 onto the base material 12. The nozzles 152 are arranged in the head module 151 such that the nozzles 152 in the first-, second-, third-, and fourth-row nozzle groups eject ink at different landing positions from one another. For example, each nozzle 152 in the first-row nozzle group ejects ink at a landing position between inks ejected by the nozzles 152 in the third- and fourth-row nozzle groups.

In the example shown in FIG. 5, the nozzles denoted by reference numerals 152(p) and 152(q) eject ink at adjacent landing positions 42 and 43. Two nozzles, such as those whose ink landing positions are adjacent as described above, are considered herein "adjacent nozzles". In the above example, the nozzles denoted by reference numerals 152(p) and 152(q) are considered adjacent nozzles.

It should be noted that when the name of one color is referred to as "Z", nozzles that eject Z ink (included in a Z inkjet head 150) will also be referred to below as "Z inkjet nozzles". For example, the nozzles that eject cyan ink (included in the cyan inkjet head 150(C)) will also be referred to below as the "cyan inkjet nozzles".

<3. Hardware Configuration of the Print Controller>

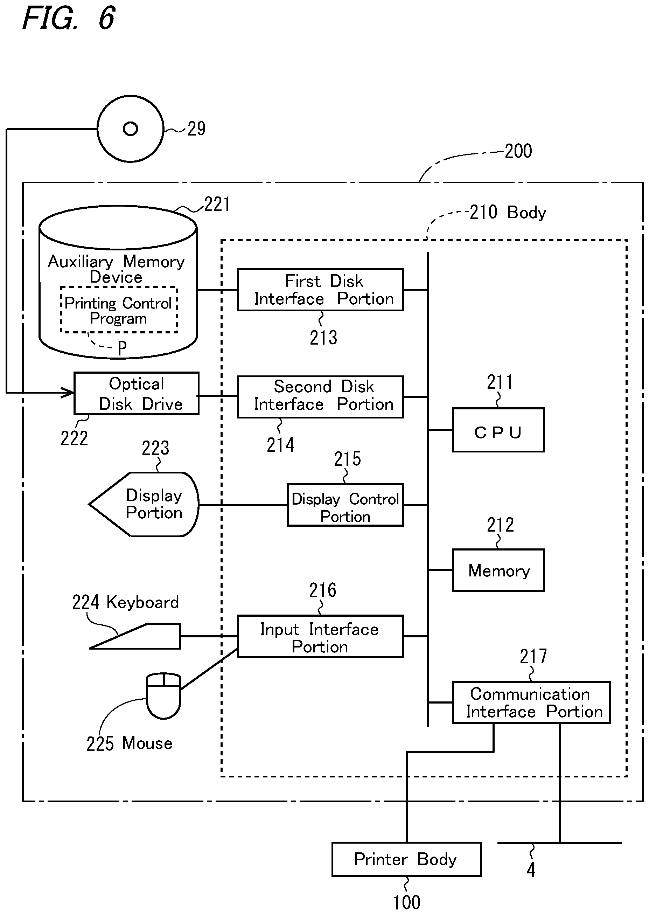

FIG. 6 is a block diagram illustrating the hardware configuration of the print controller 200. As shown in FIG. 6, the print controller 200 includes a body 210, an auxiliary memory device 221, an optical disk drive 222, a display portion (or display device) 223 (referred to below simply as a "display portion 223"), a keyboard 224, and a mouse 225. The body 210 includes a CPU (processor) 211, memory 212, a first disk interface portion 213, a second disk interface portion 214, a display control portion 215, an input interface portion 216, and a communication interface portion 217. The CPU 211, the memory 212, the first disk interface portion 213, the second disk interface portion 214, the display control portion 215, the input interface portion 216, and the communication interface portion 217 are connected to one another via a system bus. The auxiliary memory device 221 is connected to the first disk interface portion 213. The optical disk drive 222 is connected to the second disk interface portion 214. The display portion 223 is connected to the display control portion 215. The keyboard 224 and the mouse 225 are connected to the input interface portion 216. The printer body 100 is connected to the communication interface portion 217 via a communication cable. Moreover, the communication line 4 is connected to the communication interface portion 217. The auxiliary memory device 221 is a magnetic disk device or suchlike. The optical disk drive 222 receives an optical disk 29, which is a computer-readable recording medium, such as a CD-ROM or a DVD-ROM, i.e., a non-transitory recording medium. The display portion 223 is a liquid crystal display or suchlike. The display portion 223 is used to display information desired by the operator. The keyboard 224 and the mouse 225 are used to input a user instruction to the print controller 200.

The auxiliary memory device 221 has stored therein a printing control program P (used for controlling the execution of a printing process by the printer body 100). The CPU 211 executes the printing control program P in the memory 212 after reading the printing control program P from the auxiliary memory device 221, thereby achieving various functions of the print controller 200. The memory 212 includes a RAM and a ROM. The memory 212 functions as a work area for the CPU 211 to execute the printing control program P stored in the auxiliary memory device 221. Note that the printing control program P is provided in the state of being stored in the computer-readable recording medium (non-transitory recording medium). Specifically, for example, the user purchases the optical disk 29 as the recording medium of the printing control program P and inserts the optical disk 29 into the optical disk drive 222 with the result that the printing control program P is read from the optical disk 29 and installed onto the auxiliary memory device 221.

<4. White Correction>

In the present embodiment, when the base material 12 used for printing as the printing medium is white, the density data contained in the printing data is corrected simultaneously with the aforementioned nozzle-defect correction, such that white ink is ejected by white inkjet nozzles that correspond to nozzles adjacent to a defective nozzle eject (referred to below as "defect-adjacent nozzles" for the sake of convenience). This process will be referred to below as "white correction".

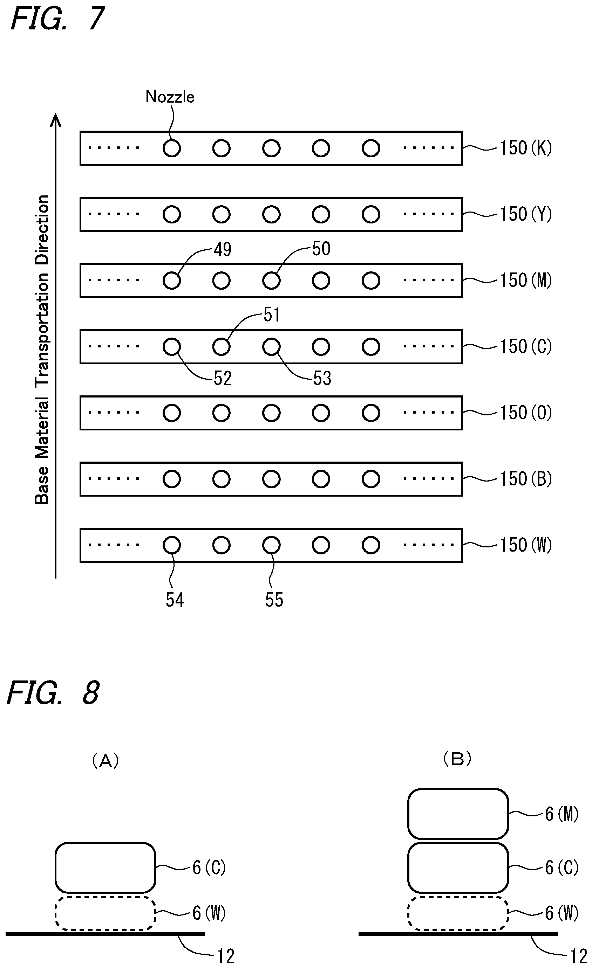

FIG. 7 is a diagram outlining white correction. Note that, for the sake of convenience, FIG. 7 shows a plurality of nozzles arranged in a line within each inkjet head 150. Moreover, the UV-LED arrays 159 are not shown in FIG. 7. It is assumed here that among the nozzles included in the cyan inkjet head 150(C), the one denoted by reference numeral 51 is a defective nozzle. In this case, nozzle-defect correction, as described above, is performed, resulting in the defect-adjacent nozzles (denoted by reference numerals 52 and 53) ejecting cyan ink in a larger amount than originally intended. Moreover, performing white correction results in the nozzles that correspond to the defect-adjacent nozzles (denoted by reference numerals 54 and 55) ejecting white ink. Note that in this example, cyan ink serves as a first or second ink, while white ink serves as a correction aid ink.

In the present embodiment, white correction is performed on a high-density portion of a region printed with single-color ink (referred to below as a single-color region), where this high-density portion is printed with the single-color ink that should be ejected through a defective nozzle. In the case where the defective nozzle is included in the cyan inkjet head 150(C), as described above, white correction is performed for a region that undergoes single-color printing using cyan ink with a high density of, for example, 80% or more. Note that determination criterion values for deciding on the region for which white correction should be performed (referred to below as the "white correction region" or simply as the "correction region") will be described in detail later.

Furthermore, in the present embodiment, white correction is also performed for a region that undergoes mixed-color printing (referred to below as a "mixed-color region") using two or more inks other than white and transparent inks, selected from cyan (C), magenta (M), yellow (Y), black (K), blue (B), and orange (O) inks (i.e., process-color and spot-color inks). For example, in the case of a mixed-color region with cyan and magenta inks, when the cyan inkjet head 150(C) includes a defective nozzle, as described above, white correction is performed for a region where, for example, the total printing density of cyan and magenta inks is 90% or more and the printing density of the ink ejected by the inkjet head including the defective nozzle, i.e., cyan ink, is 70%. In this example, nozzles 52 and 53 in the cyan inkjet head 150(C), along with nozzles 49 and 50 in the magenta inkjet head 150(M), are defect-adjacent nozzles (see FIG. 7), one from the cyan and magenta inks corresponds to the first ink, the other corresponds to the second ink, and white ink serves as the correction aid ink. Note that a determination criterion value for deciding which portion of the mixed-color region should undergo white correction (white correction region) will be described in detail later.

In the above example where the single-color region undergoes white correction, when white correction is performed, the white inkjet nozzles 54 and 55, which correspond to the defect-adjacent nozzles, initially eject white ink onto the base material 12 during printing. Thereafter, the defect-adjacent nozzles 52 and 53 in the cyan inkjet head 150(C) eject cyan ink. That is, in the regions subjected to white correction, cyan ink is ejected onto white ink that has been ejected onto the base material 12, as schematically shown in (A) of FIG. 8.

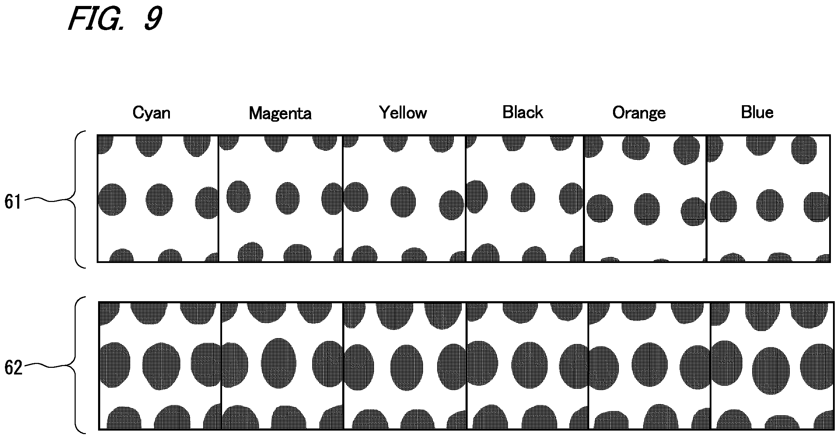

Incidentally, the wetting spread range of the color ink (in the above example, cyan ink) on the base material 12 is larger when the color ink is ejected onto the white ink that has been ejected onto the base material 12 than when the color ink is ejected directly onto the base material 12. Here, the "color ink" refers to inks other than transparent ink that are different colors from the base material (printing medium). The "wetting spread range" refers to the area of a dot formed on the printing medium through ink ejection. Accordingly, the size of a dot formed through color ink ejection onto the base material 12 serving as the printing medium is larger when the color ink is ejected onto the white ink that has been ejected onto the base material 12 than when the color ink is ejected directly onto the base material 12. In relation to this, FIG. 9 shows an example of experimental results. In FIG. 9, reference numeral 61 denotes a portion exemplifying the size of each dot of color inks ejected directly onto a film base material, while reference numeral 62 denotes a portion exemplifying the size of each dot of the color inks ejected after white ink is ejected directly onto the same base material. For each color ink (including black ink), it can be seen that the wetting spread range increases with the prior ejection of white ink onto the base material. In view of the above, white ink is ejected in advance at positions where the defect-adjacent nozzles eject color inks onto the base material 12, resulting in the color inks ejected by the defect-adjacent nozzles spreading sufficiently onto the base material 12 and enhancing the effect of nozzle-defect correction (i.e., suppressing the occurrence of image defects due to the defective nozzle and thereby preventing reduced printing quality). Thus, white ink functions as a type of ink (referred to herein as "correction aid ink") that assists in the correction of image defects such as dot missing in printed images using color ink (in the example shown in FIG. 7, cyan ink, which is ejected from defect-adjacent nozzles, is used to correct defects).

Furthermore, white ink ejection is normally followed by curing through ultraviolet irradiation. However, in the present embodiment, when white correction is performed, resulting in white ink being ejected into a target region, the UV-LED array 159(b) is either disabled from ultraviolet irradiation or allowed to perform ultraviolet irradiation on the white ink at a reduced intensity. Applying no ultraviolet irradiation or weak ultraviolet irradiation to the white ink, as described above, increases the wetting spread range of the white ink and effectively increases the wetting spread ranges of the color inks ejected onto the white ink.

In the above example where the mixed-color region undergoes white correction, when white correction is performed, the white inkjet nozzles 54 and 55, which correspond to the defect-adjacent nozzles, initially eject white ink onto the base material 12 during printing. Thereafter, the defect-adjacent nozzles 52 and 53 in the cyan inkjet head 150(C) eject cyan ink, followed by the defect-adjacent nozzles 49 and 50 in the magenta inkjet head 150(M) ejecting magenta ink (see FIG. 7). That is, in the regions subjected to white correction, cyan ink is ejected onto white ink that has been ejected onto the base material 12, and then magenta ink is ejected onto the cyan ink, as schematically shown in (B) of FIG. 8.

<5. White Correction Region Determination Method>

Conventional nozzle-defect correction (also referred to below as "normal nozzle-defect correction") may not sufficiently rectify defects in printed images caused by ink ejection failure (typically, density reductions that appear as streaks due to dot missing), as described earlier. Particularly in the case where image defects occur in a high-density, single-color region due to ejection failure, such image defects are not sufficiently rectified with the dot size of ink ejected by defect-adjacent nozzles. To rectify such defects in printed images, white correction as described above can be utilized, but white correction may be excessive or result in unnecessary white ink consumption, depending on the density of images to be printed or the amount of ink per pixel corresponding to that density. Accordingly, it is necessary to determine, in advance, suitable reference values for determining whether to perform white correction or normal nozzle-defect correction when there is an image defect in the single-color region due to ejection failure (i.e., determination criterion values for the suitability of white correction). Moreover, in the case where there is an image defect in the mixed-color region due to ejection failure, the suitability of white correction depends on total area coverage (TAC), which is the sum of per-pixel amounts of inks ejected into the mixed-color region. Moreover, even with the same total area coverage value, the suitability of white correction varies depending on the percentage of the per-pixel amount of ink that defective nozzles should eject into the mixed-color region relative to the total area coverage (referred to below as the "defective nozzle ink amount percentage").

Therefore, in the present embodiment, for cases where an image defect occurs in the single-color region due to ejection failure, the maximum total area coverage for sufficiently rectifying the image defect with normal nozzle-defect correction is determined as a first determination criterion value. Moreover, for cases where an image defect occurs in the mixed-color region due to ejection failure, combinations of the maximum total area coverage and the maximum defective nozzle ink amount percentage for sufficiently rectifying the image defect with normal nozzle-defect correction are determined in advance (these maximum values will be referred to below as "second and third determination criterion values", respectively).

<5.1 Determination Criterion Value for the Necessity for White Correction in the Single-Color Region>

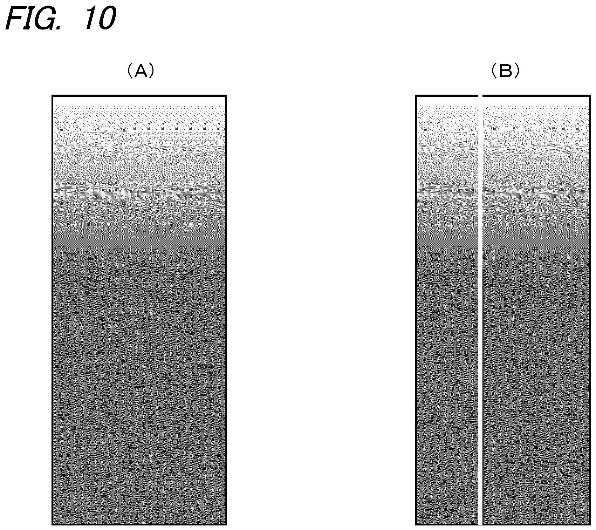

A method is described for obtaining the first determination criterion value for the necessity of white correction to rectify an image defect caused by a defective nozzle in the single-color region. Printing data is initially prepared to include density data representing an image with a region where the single-color density changes continuously and monotonously in the transportation direction of the base material 12 (referred to below as a "single-color gradation region"), as shown in (A) of FIG. 10. When printing is performed using this printing data, with no ink ejected from only one nozzle in the inkjet head corresponding to the single color (this printing will be referred to below as "virtual defective nozzle printing"), a printed image is obtained with an image defect (i.e., a portion perceived as a white streak) due to dot missing, as shown in (B) of FIG. 10. To obtain the first determination criterion value for the density data contained in the printing data, normal nozzle-defect correction and white correction (i.e., nozzle-defect correction using white ink) are performed on the single-color gradation region, resulting in normal correction density data and white correction density data, respectively.

Next, virtual defective nozzle printing is performed using printing data that contains the normal correction density data, resulting in a printed image with an image defect in a single-color gradation region (referred to below as a "normal correction printed image"). Then, the single-color gradation region is visually inspected to identify a portion where the image defect can be rectified and to obtain the maximum density of the single color that allows normal nozzle-defect correction to sufficiently rectify the image defect. Here, the density of the single color corresponds to the amount of single-color ink per pixel and will be referred to below as the "single-color ink amount" and expressed in percentage, where the maximum amount of single-color ink usable per pixel is 100%. Note that in the single-color region, the amount of inks other than the single-color ink is 0, and therefore the amount of single-color ink is equal to the total area coverage. Therefore, in the present embodiment, the amount of single-color ink that corresponds to the maximum density obtained through visual inspection of the single-color gradation region of the normal correction printed image, as described above, is used as a tentative first determination criterion value. Thereafter, virtual defective nozzle printing is performed using printing data that contains the white correction density data, resulting in a printed image (referred to below as a "white correction printed image"). If a single-color gradation region of the white correction printed image is visually confirmed to not be excessively corrected at the tentative first determination criterion value, the tentative first determination criterion value is set as a first determination criterion value. If the single-color gradation region is determined to be excessively corrected at the tentative first determination criterion value, the single-color gradation region is visually inspected to determine the minimum density of the single color at which the image defect is rectified without excessive correction. The amount of single-color ink that can appropriately rectify the image defect is visually determined within the range between the amounts of single-color ink that respectively correspond to the minimum and maximum densities. The determined amount is set as a first determination criterion value. However, the first determination criterion value may be determined using other methods, so long as the value is within the range between the amounts of single-color ink that respectively correspond to the minimum and maximum densities.

For each of the cyan, magenta, yellow, black, blue, and orange inks, the normal correction printed image and the white correction printed image, as described above, were actually formed on the base material 12 and subjected to visual inspection of the respective single-color gradation regions. The normal correction printed image was confirmed to have the image defect sufficiently rectified where the amount of single-color ink was 60% or less, while the white correction printed image was confirmed to have no excessive correction where the amount of single-color ink was 60%. Therefore, in the present embodiment, the first determination criterion value is set at 60%. As a result, when there is an image defect in the single-color region due to ejection failure of a defective nozzle, if the amount of single-color ink is 60% or less in a portion of the single-color region that covers the position corresponding to the defective nozzle, this portion is determined as a normal correction region. If the amount of single-color ink in the same portion is greater than 60%, that portion is determined as a white correction region.

<5.2 Determination Criterion Values for the Necessity for White Correction in the Mixed-Color Region>

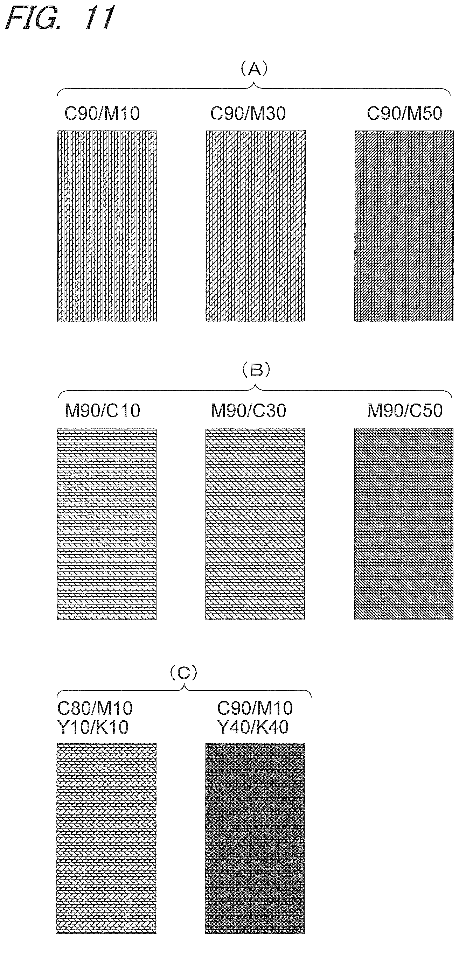

Described next is a method for obtaining the second and third determination criterion values for the necessity of white correction to rectify an image defect caused by a defective nozzle in the mixed-color region. Printing data is initially prepared to include density data representing an image of the mixed-color region for each of various forms of color mixing as shown in (A) to (C) of FIG. 11. In FIG. 11, the notation "Xn/Zm" above each mixed-color region indicates that the mixed-color region is formed by ejecting X ink in an n% amount and Z ink in an m% amount. For example, among the three mixed-color regions shown in (A) of FIG. 11, the leftmost mixed-color region has the notation "C90/M10" indicating that this mixed-color region is formed by ejecting cyan (C) ink in a 90% amount and magenta (M) ink in a 10% amount.

For each of the printing data as prepared above (in the example shown in FIG. 11, eight pieces of printing data), it is assumed that there is no ink ejection from one nozzle in the inkjet head that should eject ink of one color used in the form of color mixing corresponding to the printing data. Normal nozzle-defect correction and white correction are performed on the mixed-color region in the density data of the printing data, resulting in normal correction density data and white correction density data, respectively.

Next, printing (virtual defective nozzle printing) is performed using printing data that contains the normal correction density data, with no ink ejected from only one nozzle in the inkjet head corresponding to the one color, resulting in a printed image (normal correction printed image) on the base material 12. The normal correction printed image is visually inspected to determine whether the image defect caused by the nozzle ejecting no ink into the mixed-color region has been rectified. Moreover, printing (virtual defective nozzle printing) is performed using printing data that contains the white correction density data, with no ink ejected from only one nozzle in the inkjet head corresponding to the one color, resulting in a white correction printed image on the base material 12. The white correction printed image is visually inspected to determine whether the image defect caused by the nozzle ejecting no ink has been rectified. For each piece of printing data corresponding to the various forms of color mixing, the normal correction printed image and the white correction printed image, as described above, were visually inspected, and the results were assessed. In regard to the mixed-color region with an image defect caused by the defective nozzle, the image defect was confirmed to be rectified in the normal correction printed image corresponding to the mixed-color region, if the total area coverage was 90% or less, or the percentage of the amount of ink in the color that should have ejected by the defective nozzle (referred to below as the "defective nozzle color") relative to the total area coverage (referred to below as the "defective nozzle ink amount percentage") was 60% or less. Moreover, in regard to the mixed-color region with an image defect caused by the defective nozzle, the white correction printed image corresponding to the mixed-color region was not confirmed to be excessively corrected if the total area coverage was greater than approximately 90% and the defective nozzle ink amount percentage was greater than approximately 60%. Therefore, in the present embodiment, the second and third determination criterion values are set at 90% and 60%, respectively. As a result, when there is an image defect in the mixed-color region due to ejection failure of a defective nozzle, a portion of the mixed-color region that covers the position corresponding to the defective nozzle is determined as a normal correction region if the total area coverage is 90% or less, or the defective nozzle ink amount percentage is 60% or less, in the portion of the mixed-color region. If the total area coverage is greater than 90% and the defective nozzle ink amount percentage is greater than 60%, that portion is determined as a white correction region.

It should be noted that in the example shown in FIG. 11, for the sake of convenience, eight pieces of printing data are prepared to conduct the visual assessment of the normal correction printed images and the white correction printed images. However, in practice, a greater number of pieces of printing data are prepared than the number of various forms of color mixing and used to obtain practical determination criteria (i.e., the second and third determination criterion values) for the necessity of white correction in the mixed-color region. Moreover, the specific numerals of the first determination criterion value (60%), the second determination criterion value (90%), and the third determination criterion value (60%) are merely illustrative, and it is understood that other numerals can be used.

<6. Transparent Correction>

In the present embodiment, when the base material used for printing as the printing medium is not white (for example, transparent or silver), in the aforementioned nozzle-defect correction, the density data in the printing data is corrected such that transparent ink is ejected as a correction aid ink by transparent inkjet nozzles that correspond to nozzles adjacent to a defective nozzle (i.e., defect-adjacent nozzles). This process will be described below as "transparent correction".

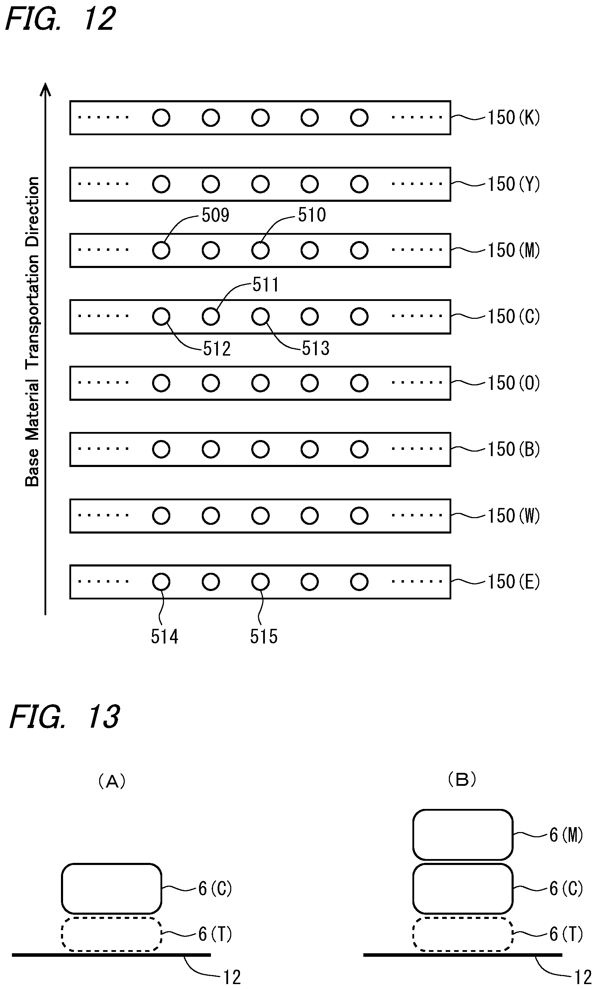

It is assumed here that among the nozzles included in the cyan inkjet head 150(C), the one denoted by reference numeral 511 in FIG. 12 is a defective nozzle. In this case, nozzle-defect correction, as described above, is performed, resulting in the defect-adjacent nozzles (denoted by reference numerals 512 and 513) ejecting cyan ink in a larger amount than originally intended. Moreover, performing transparent correction results in the transparent inkjet nozzles (denoted by reference numerals 514 and 515) that correspond to the defect-adjacent nozzles ejecting transparent ink.

In the above example where the single-color region undergoes transparent correction, when transparent correction is performed, the transparent inkjet nozzles that correspond to the defect-adjacent nozzles initially eject transparent ink onto the base material 12 during printing. Thereafter, the defect-adjacent nozzles eject cyan ink. That is, in the regions subjected to transparent correction, cyan ink 6(C) is ejected onto transparent ink 6(T) that has been ejected onto the base material 12, as schematically shown in (A) of FIG. 13.

It should be noted that in the case of transparent correction, as with white correction, the wetting spread range of the color ink (in the above example, cyan ink) on the base material 12 is larger when the color ink is ejected onto the transparent ink that has been ejected onto the base material 12 than when the color ink is ejected directly onto the base material 12. As described earlier, the wetting spread range refers to the area of a dot formed on the printing medium through ink ejection. Accordingly, the size of a dot formed through color ink ejection onto the base material 12 serving as the printing medium is larger when the color ink is ejected onto the transparent ink that has been ejected onto the base material 12 than when the color ink is ejected directly onto the base material 12 (see FIG. 9). Therefore, transparent ink is ejected in advance at positions where the defect-adjacent nozzles eject color inks onto the base material 12, resulting in the color inks ejected by the defect-adjacent nozzles spreading sufficiently on the base material 12 and enhancing the effect of nozzle-defect correction (i.e., suppressing the occurrence of image defects due to the defective nozzle and thereby preventing reduced printing quality).

Furthermore, in the present embodiment, when transparent correction is performed, resulting in transparent ink being ejected into a target region, the UV-LED array 159(a) is either disabled from ultraviolet irradiation or allowed to perform ultraviolet irradiation on the transparent ink at a reduced intensity. Applying no ultraviolet irradiation or weak ultraviolet irradiation to the transparent ink, as described above, increases the wetting spread range of the transparent ink and effectively increases the wetting spread ranges of the color inks ejected onto the transparent ink.

In the above example where the mixed-color region undergoes transparent correction, when transparent correction is performed, the transparent inkjet nozzles 514 and 515, which correspond to the defect-adjacent nozzles, initially eject transparent ink onto the base material 12 during printing. Thereafter, the defect-adjacent nozzles 512 and 513 in the cyan inkjet head 150(C) eject cyan ink, followed by the defect-adjacent nozzles 509 and 510 in the magenta inkjet head 150(M) ejecting magenta ink. That is, in the regions subjected to transparent correction, cyan ink 6(C) is ejected onto transparent ink 6(T) that has been ejected onto the base material 12, and then magenta ink 6(M) is ejected onto the cyan ink 6(C), as schematically shown in (B) of FIG. 13.

<7. Determination of the Correction Execution Area>

When printing an image that includes narrow linear patterns such as characters or barcodes, performing white or transparent correction as described above may lead to ink bleeding, which can result in a reduction in printed image quality. This will be described below.

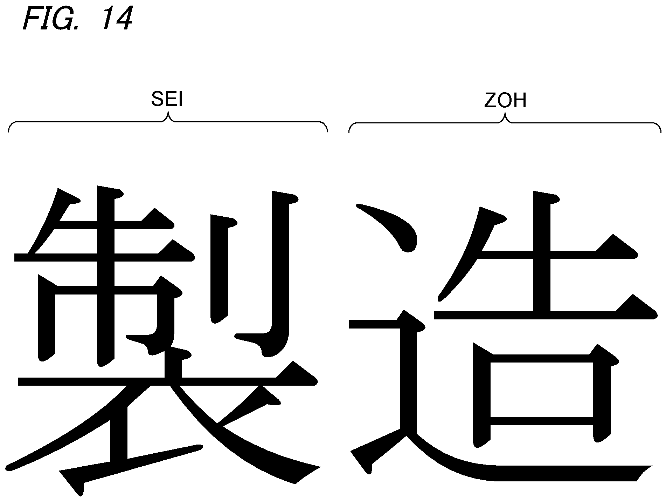

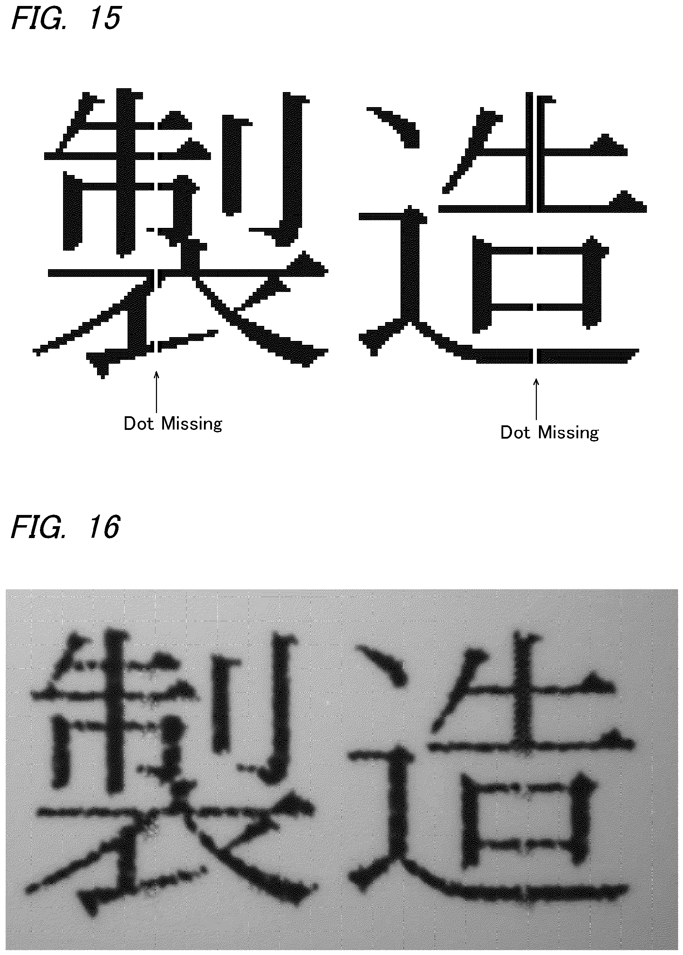

Consider now the case of printing the word consisting of two Kanji characters (Chinese characters) shown in FIG. 14 using the inkjet printing apparatus. The word is pronounced "seizoh" in Japanese. The left and right of the two Kanji characters in the word shown in FIG. 14 will be referred to below as "character SEI" and "character ZOH", respectively. When there is a defective nozzle in the inkjet head for ejecting ink corresponding to the color of these characters SEI and ZOH, if the inkjet printing apparatus prints the characters SEI and ZOH without nozzle-defect correction, a printed image as shown in FIG. 15 is formed on the base material 12 serving as the printing medium. Here, the transportation direction corresponds to the vertical direction of the figure, and the base material 12 is white. In this printed image, density decreases due to dot missing appear as streaks (in the example shown in FIG. 15, white vertical streaks) in the linear patterns constituting the characters SEI and ZOH shown in FIG. 14. To deal with this, when these characters are printed with white correction as nozzle-defect correction intended for addressing such dot missing caused by defective nozzles, ink bleeding may occur near the ends of the character-constituting linear patterns in the transportation direction within the portions where white streaks would appear if nozzle-defect correction were not performed, as shown in FIG. 16.

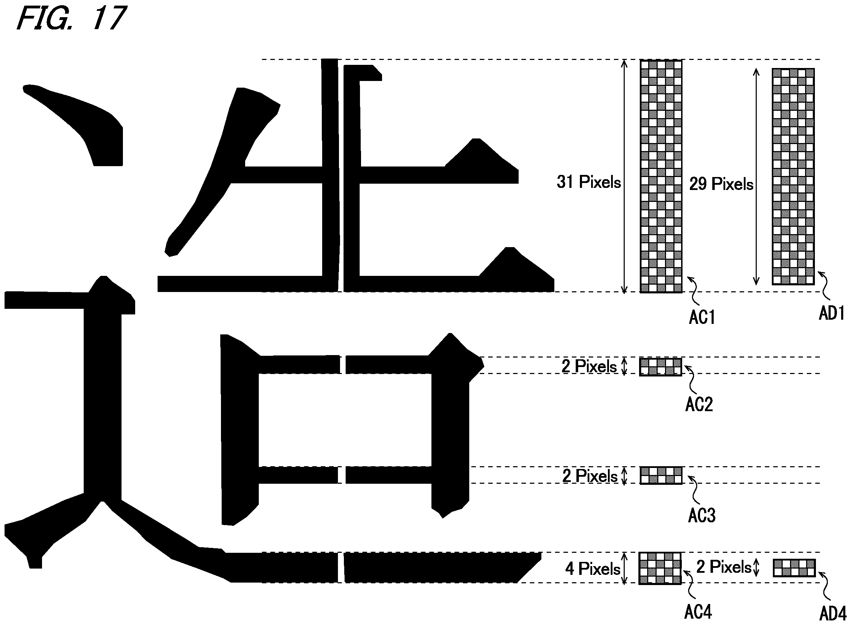

In the present embodiment, when white correction is performed as nozzle-defect correction intended for addressing the reduction in printed image quality due to dot missing caused by a defective nozzle, white ink is ejected into the correction region (in this example, the white correction region) where the defective nozzle and neighboring nozzles eject ink, before another ink is ejected for image formation (in this example, color ink, such as black ink, for forming the image of the characters). In the following, when white correction is performed, a region that should be corrected using white ink in a printed image to be formed on the base material 12 based on the printing data is treated as "correction region", which includes the region where white ink should be ejected. More specifically, the "correction region" includes a region where ink should be ejected through the defective nozzle (i.e., a region with an image defect) and neighboring regions where white ink should be ejected to compensate for the image defect. Note that these correction regions will also be referred to as the "white correction regions" to be distinguished from transparent correction regions, which will be described later. Such a correction region typically consists of continuous areas, the number of which is at least one depending on the image to be printed. For example, the character ZOH in the example shown in FIG. 15 (i.e., the right in FIG. 14) is constituted by rectangular continuous areas AC1, AC2, AC3, and AC4 in the printed image, as shown in FIG. 17. Specifically, continuous area AC1 spans a range of 31 consecutive missing pixels in the transportation direction and a range of five consecutive pixels in the width direction of the base material 12 (referred to below as the base material width direction). Where necessary, these ranges of consecutive pixels in the transportation direction and the base material width direction will also be referred to below as the "transportation direction range" and the "base material width direction range", respectively. The missing pixels are those that should have been formed on the base material 12 by ink ejected through the defective nozzle. The five consecutive pixels in the base material width direction are aligned with a missing pixel centered. Continuous area AC2 spans a range of two consecutive missing pixels in the transportation direction and a range of five consecutive pixels in the base material width direction aligned with a missing pixel centered. Continuous area AC3 spans a range of two consecutive missing pixels in the transportation direction and a range of five consecutive pixels in the base material width direction aligned with a missing pixel centered. Continuous area AC4 spans a range of four consecutive missing pixels in the transportation direction and a range of five consecutive pixels in the base material width direction aligned with a missing pixel centered. When color ink, such as black ink, for image formation of the character ZOH is ejected onto white ink applied in continuous areas AC1 to AC4, which constitute the correction region (referred to below as "individual correction areas"), the wetting spread range of the color ink ejected at the ends of each individual correction area in the transportation direction exceeds the boundaries of the individual correction area. As a result, the exceeding portions are perceived as ink bleeding.

Therefore, in the present embodiment, one pixel row, which is a section of one pixel wide, is removed from each end of the individual correction areas ACk (where k = 1 to 4) in the transportation direction (i.e., the vertical direction in the figure), resulting in "correction execution areas ADk", as shown in FIG. 17. White ink for white correction is ejected into the correction execution areas ADk, rather than the individual correction areas ACk (i.e., white ink is not ejected in the one-pixel-wide section at each end of the individual correction areas ACk in the transportation direction). However, for individual correction areas AC2 and AC3, which span only two pixels wide in the transportation direction, it is not possible to establish correction execution areas AD2 and AD3, and therefore no white ink is ejected as a correction aid ink. Note that the process of removing a predetermined number of pixel rows from each end of the rectangular continuous areas, which serve as the individual correction areas, in the transportation direction will be referred to below as the "end thinning process". In the end thinning process exemplified in FIG. 17, the number of pixel rows to be removed from each end of the individual correction areas in the transportation direction is one (this will be referred to below as the "thinning number").

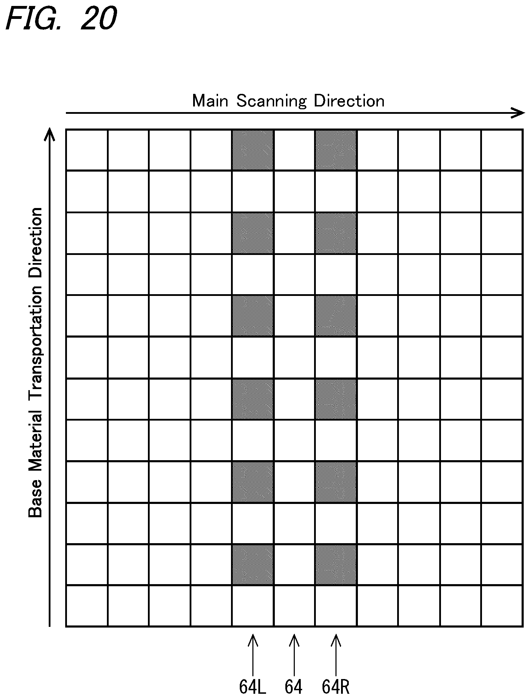

In this manner, white correction involves performing the end thinning process on each individual correction area included in the correction region to determine correction execution areas, so that white ink for white correction is ejected only into these correction execution areas. More specifically, when any individual correction area in the correction region contains more pixels in the transportation direction than twice the thinning number, that individual correction area is subjected to the end thinning process to determine a correction execution area. In the end thinning process, pixel rows corresponding to the thinning number are removed from each end of that rectangular continuous area (i.e., that individual correction area) in the transportation direction. No correction execution area is set for any individual correction area where the number of pixels in the transportation direction is less than or equal to twice the thinning number. Moreover, white ink for white correction is not ejected throughout each correction execution area, but in a cyclic, pixel-by-pixel pattern in which one pixel where white ink is ejected alternates with one pixel without white ink ejection (details will be described later with reference to FIGS. 20 to 25). In the example shown in FIG. 17, white ink is ejected only into the hatched pixels in correction execution areas AD1 and AD4. In individual correction areas AC1 and AC4, white ink is not ejected into the sections removed at the ends by the end thinning process, while in individual correction areas AC2 and AC3, no white ink is ejected. Note that the thinning number is a relatively low predetermined natural number, such as 1 in the example shown in FIG. 17, but this is not limiting. However, given that images consisting of characters or similar elements often contain a substantial number of linear patterns that are narrow in the transportation direction, the thinning number is preferably set to 1 or 2.

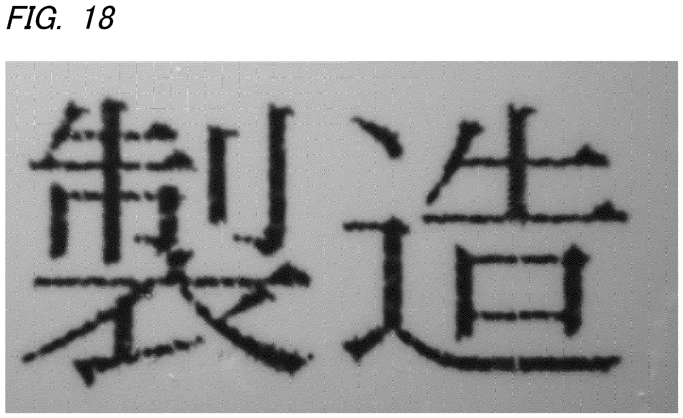

FIG. 18 is an illustration exemplifying a printed image resulting from printing characters with white correction involving the end thinning process in the present embodiment. In this example, the defective nozzle in the inkjet head used for forming the printed image shown in FIGS. 15 and 16 is assumed to remain in the same condition. When the word consisting of the Kanji characters SEI and ZOH, as shown in FIG. 14, is printed using white correction without involving the end thinning process described above, the occurrence of image defects (white streaks) in the printed image due to dot missing caused by nozzle defect is suppressed, but ink bleeding occurs around the ends of individual correction areas in the transportation direction, as shown in FIG. 16. On the other hand, in the present embodiment in which the word consisting of the characters SEI and ZOH is printed with white correction involving the end thinning process, the correction execution areas where white ink should be ejected are determined as described above, so that the occurrence of both image defects (white streaks) in the printed image caused by dot missing due to nozzle defect and ink bleeding, as exemplified in FIG. 16, is suppressed, as shown in FIG. 18.

While the foregoing description has been provided for white correction performed when printing images that include narrow linear patterns such as characters or barcodes, the same applies to transparent correction. Specifically, the wetting spread range of color ink on the base material 12 is larger when the color ink is ejected onto transparent ink applied to the base material 12 as a correction aid ink than when the color ink is directly ejected onto the base material 12. Accordingly, when transparent correction is performed for printing an image that includes narrow linear patterns such as characters or barcodes, the end thinning process described above is also performed to determine correction execution areas, and transparent ink is ejected only into the correction execution areas, thereby suppressing the occurrence of both image defects due to dot missing caused by nozzle defect and ink bleeding.

<8. Density Correction Process>

The inkjet printing apparatus 10 according to the present embodiment performs white correction and transparent correction, as described above, in addition to the conventionally performed density uniformity correction and nozzle-defect correction. The term "density correction process" herein refers to the entire process encompassing density uniformity correction, nozzle-defect correction, white correction, and transparent correction. The print controller 200 executes the printing control program P to implement a density correction process section 24, which is a functional component for executing density correction process. Note that either white or transparent correction is exclusively selected depending on the type of base material 12 used for printing (i.e., whether the base material is white or not).

<8.1 Functional Configuration>

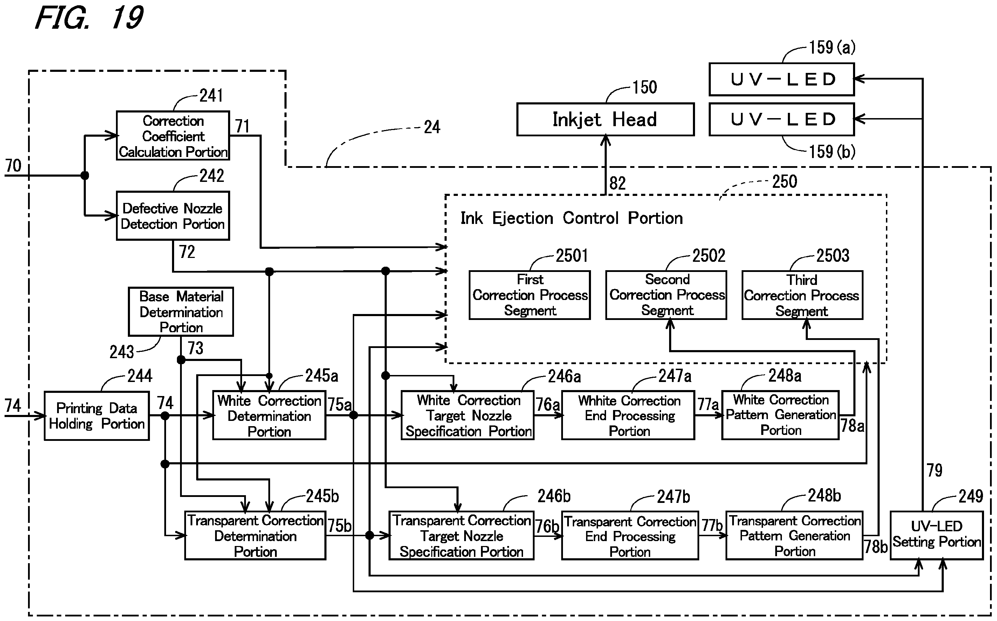

FIG. 19 is a block diagram illustrating in detail the functional configuration of the density correction process section 24 in the present embodiment. As shown in FIG. 19, the density correction process section 24 includes a correction coefficient calculation portion 241, a defective nozzle detection portion 242, a base material determination portion 243, a printing data holding portion 244 (for example, implemented using "image memory"), a white correction determination portion 245a, a white correction target nozzle specification portion 246a, a white correction end processing portion 247a, a white correction pattern generation portion 248a, a transparent correction determination portion 245b, a transparent correction target nozzle specification portion 246b, a transparent correction end processing portion 247b, a transparent correction pattern generation portion 248b, an ink ejection control portion 250, and a UV-LED setting portion 249. The ink ejection control portion 250 includes a first correction process segment 2501, a second correction process segment 2502, and a third correction process segment 2503.

The correction coefficient calculation portion 241 is configured to calculate a correction coefficient 71 for executing density uniformity correction, based on imaging data 70 obtained by the imaging portion 16 capturing a printed image of the aforementioned inspection chart. For example, when a nozzle ejects ink, resulting in a density of 4/5 of the intended density, the correction coefficient 71 for the nozzle is set at 1.25.

The defective nozzle detection portion 242 is configured to detect a defective nozzle in ejection failure from among the numerous nozzles in the color inkjet head 150 based on the imaging data 70. The defective nozzle detection portion 242 then outputs defective nozzle information 72 specifying the defective nozzle. Note that when no defective nozzle is detected, only density uniformity correction is performed by the first correction process segment 2501 in the ink ejection control portion 250.

The base material determination portion 243 is configured to determine the type of base material to be used for printing as the printing medium, based on, for example, printing conditions being set. The base material determination portion 243 then outputs base material information 73 specifying the base material.

The printing data holding portion 244 is configured to temporary hold (RIP-processed) printing data 74 transmitted by the printing data generation device 30. Note that the printing data holding portion 244 is implemented by the hardware memory 212 (see FIG. 6).

The white correction determination portion 245a is configured to determine whether to execute white correction for each region where a defective nozzle and neighboring nozzles eject ink. This determination is based on the defective nozzle information 72, the base material information 73, and the printing data 74. The white correction determination portion 245a then outputs a determination result 75a.

To be specific on this, in the present embodiment, white correction is determined not to be executed when the base material information 73 indicates that the base material used for printing is not white. Conversely, white correction is determined to be executed when the base material used for printing is white and the defective nozzle information 72 and the printing data 74 indicate that there is a defective nozzle and the region where the defective nozzle and neighboring nozzles eject ink includes a portion that undergoes single-color high-density printing using ink of the single color that should be ejected through the defective nozzle, more specifically, printing with the total area coverage (i.e., the amount of ink of the single color) higher than the first determination criterion value. In this case, the region where the defective nozzle and neighboring nozzles should eject ink includes a rectangular continuous area defined by a transportation direction range and a base material width direction range. The transportation direction range is determined by consecutive missing pixels in the transportation direction, which should have been formed on the base material 12 using the ink ejected through the defective nozzle. The base material width direction range is determined by a predetermined number of adjacent pixels (in the example shown in FIG. 17, five) aligned in the base material width direction with a missing pixel centered. This rectangular continuous area is considered as an individual correction area (where necessary, this region will be referred to below as a "white individual correction area" to be distinguished from individual correction areas for transparent and normal corrections, which will be described later). The determination result 75a outputted by the white correction determination portion 245a also includes individual correction area information specifying each individual correction area. For example, when only the characters shown in FIG. 17 are printed within the entire printing area, the outputted determination result 75a contains individual correction area information specifying four individual correction areas AC1 to AC4 and determination information indicating that all four individual correction areas AC1 to AC4 require white correction. Note that if any individual correction area specified by the individual correction area information does not require white correction but should undergo normal nozzle-defect correction, the outputted determination result 75a also contains information indicating that the individual correction area does not require white correction.

Furthermore, white correction is determined to be executed when there is a defective nozzle and the region where the defective nozzle and neighboring nozzles should eject ink includes a portion that undergoes mixed-color high-density printing using two or more color inks including the color ink to be ejected from the defective nozzle (i.e., ink of the defective nozzle color) with the defective nozzle color being at a high density, more specifically, printing with the total area coverage higher than the second determination criterion value and the defective nozzle ink amount percentage (i.e., the percentage of the amount of ink of the defective nozzle color relative to the total area coverage) higher than the third determination criterion value. In this case also, the region where the defective nozzle and neighboring nozzles should eject ink includes a rectangular continuous area defined by the transportation direction range determined by consecutive missing pixels in the transportation direction and the base material width direction range determined by a predetermined number of adjacent pixels (for example, three or five) aligned in the base material width direction with a missing pixel centered. This rectangular continuous area is considered as an individual correction area (i.e., a white individual correction area).

In other words, white correction is determined not to be executed even when there is a defective nozzle, if the region where the defective nozzle and neighboring nozzles should eject ink does not include either a portion that undergoes single-color high-density printing using ink of the color that should be ejected through the defective nozzle (i.e., ink of the defective nozzle color) nor a portion that undergoes mixed-color high-density printing using two or more color inks, including the ink of the defective nozzle color, with a high defective nozzle ink amount percentage. In this manner, white correction is applied only to regions where image defects caused by the presence of the defective nozzle are not sufficiently rectified by normal nozzle-defect correction, thereby minimizing unnecessary white ink consumption.

The white correction target nozzle specification portion 246a is configured to, when the determination result 75a outputted by the white correction determination portion 245a indicates that white correction should be executed for any individual correction area, specify nozzles for ejecting white ink for white correction (referred to below as "white correction target nozzles") based on the defective nozzle information 72, as well as the individual correction area information and determination information contained in the determination result 75a. The white correction target nozzle specification portion 246a then outputs white correction target nozzle information 76a specifying the white correction target nozzles. The white correction target nozzle information 76a includes the individual correction area information and specifies the white correction target nozzles in relation to the white individual correction areas, i.e., the individual correction areas that require white correction.

Incidentally, in the present embodiment, templates are prepared for white correction to indicate patterns in which white ink is ejected at pixels within a printing area. These templates specify the white ink injection patterns on a pixel-by-pixel basis and are referenced by the white correction target nozzle specification portion 246a and the white correction pattern generation portion 248a. FIG. 20 shows an example of such prepared templates. In FIG. 20, reference numeral 64 denotes a column of pixels corresponding to the defective nozzle, while the hatched pixels are targeted for white ink ejection. Note that in the main scanning direction (i.e., the base material width direction), each nozzle corresponds to only one pixel. In the example shown in FIG. 20, these hatched pixels are included in the columns denoted by reference numerals 64L and 64R. Accordingly, among the numerous nozzles in the white inkjet head 150(W), the nozzles that eject ink in the columns of pixels denoted by reference numerals 64L and 64R are specified as the correction target nozzles by the white correction target nozzle specification portion 246a.

The white correction end processing portion 247a is configured to perform the end thinning process (see FIG. 17) on each individual correction area that requires white correction (i.e., each white individual correction area) based on the individual correction area information contained in the white correction target nozzle information 76a, thereby determining a corresponding correction execution area for each white individual correction area (also referred to below as a "white correction execution area" to be distinguished from a "correction execution area" for transparent correction, which will be described later). The white correction end processing portion 247a then outputs white correction execution area information 77a. The white correction execution area information 77a includes execution area information specifying each correction execution area and specifies the white correction target nozzles in relation to these correction execution areas. Note that, for any white individual correction area specified by the individual correction area information contained in the white correction target nozzle information 76a, when the number of pixels along the transportation direction contained in the any white individual correction area is less than or equal to twice the thinning number, no correction execution area is set for the any white individual correction area (see individual correction areas AC2 and AC3 shown in FIG. 17).

The white correction pattern generation portion 248a is configured to generate a white correction execution pattern 78a, which specifies white ink ejection patterns on a pixel-by-pixel basis within the entire printing area in accordance with templates as described above, based on the white correction execution area information 77a. The white correction execution pattern 78a consists of white individual correction execution patterns, which specify the white ink ejection patterns on a pixel-by-pixel basis within respective corresponding correction execution areas for the white individual correction areas in accordance with the templates. In the example shown in FIG. 17, the white individual correction execution patterns specify white ink ejection patterns on a pixel-by-pixel basis within correction execution areas AD1 and AD4, which correspond to individual correction areas AC1 and AC4, respectively, in accordance with templates as described above. In the present embodiment, the region where white ink should be ejected based on the thus-generated white correction execution pattern 78a is treated as a white correction execution region within the entire printing area (referred to below as a "global white correction execution region"). In the following, a region that should be corrected using white ink in a printed image to be formed on the base material 12 based on the printing data 74 is treated as a global white correction execution region, which includes the region where white ink should be ejected in accordance with the white correction execution pattern 78a. Specifically, white correction execution areas that correspond to areas where the defective nozzle should eject ink (i.e., a region with an image defect) within the entire printing area are collectively treated as a global white correction execution region. Accordingly, generating the white correction execution pattern 78a corresponds to determining the global white correction execution region. Note that the global white correction execution region will also be referred to below simply as the "global correction execution region" when there is no need for distinction from a global transparent correction execution region, which will be described later.

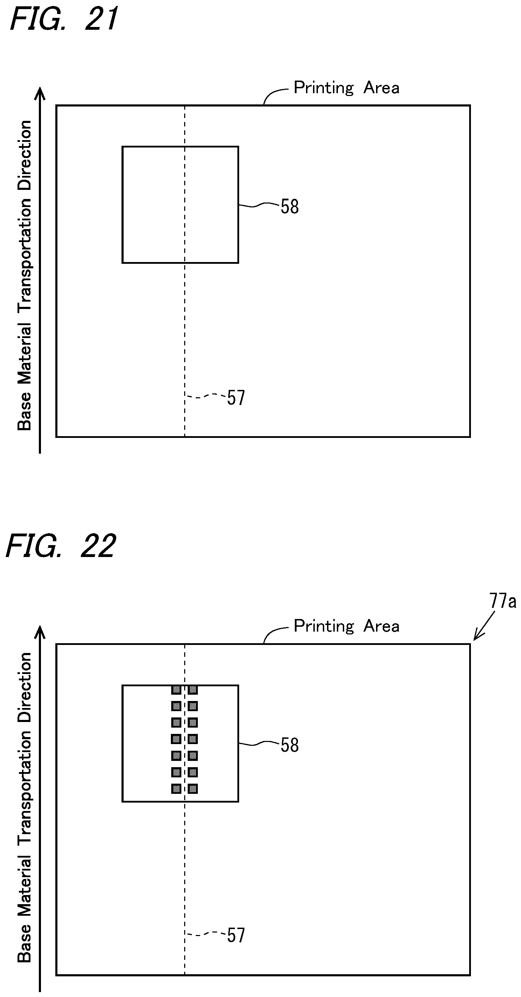

As described above, in the present embodiment, white correction is performed on both the region that undergoes single-color high-density printing and the region that undergoes mixed-color high-density printing (i.e., printing with a high total area coverage) with a high defective nozzle ink amount percentage. For example, in FIG. 21, it is assumed that the cyan inkjet nozzle that ejects ink as indicated by the dotted line denoted by reference numeral 57 is a defective nozzle and the rectangular area denoted by reference numeral 58 undergoes single-color high-density printing using cyan ink. In this case, the white correction pattern generation portion 248a generates the white correction execution pattern 78a as shown in FIG. 22 such that white correction is applied only to the portion that should be subjected to white correction within the region that undergoes single-color high-density printing using cyan ink. Note that in the case where white correction is performed on the region that undergoes mixed-color high-density printing with a high defective nozzle ink amount percentage, the white correction execution pattern 78a shown in FIG. 22 is also used such that white correction is applied only to the portion that should be subjected to white correction within the region. However, for the sake of convenience, the white correction execution pattern 78a will be described below, taking as an example only the case where white correction is performed on the region that undergoes single-color high-density printing.

The transparent correction determination portion 245b is configured to determine whether to execute transparent correction for each regions where the defective nozzle and neighboring nozzles should eject ink, based on the defective nozzle information 72, the base material information 73, and the printing data 74. The transparent correction determination portion 245b then outputs a determination result 75b.

To be specific on this, in the present embodiment, transparent correction is determined not to be executed when the base material information 73 indicates that the base material used for printing is white. Conversely, the transparent correction determination portion 245b determines to execute transparent correction when the base material used for printing is not white and the defective nozzle information 72 and the printing data 74 indicate that there is a defective nozzle and the region where the defective nozzle and neighboring nozzles should eject ink includes a portion that undergoes single-color high-density printing using ink of the single color that should be ejected through the defective nozzle, more specifically, printing with the total area coverage (i.e., the amount of ink of the single color) higher than a first determination criterion value for transparent correction, which corresponds to the first determination criterion value used by the white correction determination portion 245a. In this case, the region where the defective nozzle and neighboring nozzles should eject ink includes a rectangular continuous area defined by a transportation direction range and a base material width direction range. The transportation direction range is determined by consecutive missing pixels in the transportation direction, which should have been formed on the base material 12 using the ink ejected through the defective nozzle. The base material width direction range is determined by a predetermined number of adjacent pixels (for example, three or five adjacent pixels) aligned in the base material width direction with a missing pixel centered. This rectangular continuous area is considered as an individual correction area (where necessary, this region will be referred to below as a "transparent individual correction area" to be distinguished from individual correction areas for white correction and normal nozzle-defect correction, which are previously described). The determination result 75b outputted by the transparent correction determination portion 245b also includes individual correction area information specifying each individual correction area. Note that if any individual correction area specified by the individual correction area information does not require transparent correction but should undergo normal nozzle-defect correction, the outputted determination result 75b also contains information indicating that the individual correction area does not require transparent correction.

Moreover, the transparent correction determination portion 245b determines to execute transparent correction when the base material used for printing is not white and there is a defective nozzle and the region where the defective nozzle and neighboring nozzles should eject ink includes a portion that undergoes mixed-color high-density printing using two or more color inks including the color ink to be ejected from the defective nozzle (i.e., ink of the defective nozzle color) with the defective nozzle color being at a high density, more specifically mixed-color high-density printing with the total area coverage higher than a second determination criterion value for transparent correction and with the defective nozzle ink amount percentage (i.e., the percentage of the amount of ink of the defective nozzle color relative to the total area coverage) higher than a third determination criterion value for transparent correction. The second and third determination criterion values for transparent correction respectively correspond to the second and third determination criterion values used by the white correction determination portion 245a. In this case, also, the region where the defective nozzle and neighboring nozzles should eject ink includes a rectangular continuous area defined by a transportation direction range and a base material width direction range. The transportation direction range is determined by consecutive missing pixels in the transportation direction, which should have been formed on the base material 12 using the ink ejected through the defective nozzle. The base material width direction range is determined by a predetermined number of adjacent pixels (for example, three or five adjacent pixels) aligned in the base material width direction with a missing pixel centered. This rectangular continuous area is considered as an individual correction area (a transparent individual correction area).

In other words, transparent correction is determined not to be executed even when there is a defective nozzle, if the region where the defective nozzle and neighboring nozzles should eject ink includes neither a portion that undergoes single-color high-density printing using ink of the defective nozzle color nor a portion that undergoes mixed-color high-density printing using two or more color inks, including the ink of the defective nozzle color, with a high defective nozzle ink amount percentage. In this manner, transparent correction is applied only to the region where the image defects caused by the presence of the defective nozzle are not sufficiently rectified by normal nozzle-defect correction, thereby minimizing unnecessary transparent ink consumption. Note that the first, second, and third determination criterion values for transparent correction can be obtained in advance using a method similar to that described earlier (see FIGS. 10 and 11) for obtaining the first, second, and third determination criterion values used by the white correction determination portion 245a.

The transparent correction target nozzle specification portion 246b is configured to specify nozzles for ejecting transparent ink for transparent correction (referred to below as "transparent correction target nozzles") when the determination result 75b outputted by the transparent correction determination portion 245b indicates that transparent correction should be executed for any individual correction area. The transparent correction target nozzle specification portion 246b selects the transparent correction target nozzles from among the numerous nozzles in the transparent inkjet head 150(E) based on the defective nozzle information 72, as well as the individual correction area information and determination information contained in the determination result 75b. The transparent correction target nozzle specification portion 246b then outputs transparent correction target nozzle information 76b specifying the transparent correction target nozzles.

The transparent correction end processing portion 247b is configured to perform the end thinning process (see FIG. 17) on each individual correction area that requires transparent correction (i.e., each transparent individual correction area) based on the individual correction area information contained in the transparent correction target nozzle information 76b, thereby determining a corresponding correction execution area for each transparent individual correction area (also referred to below as a "transparent correction execution area" to be distinguished from a "correction execution area" for white correction, which is previously described). The transparent correction end processing portion 247b then outputs transparent correction execution area information 77b. The transparent correction execution area information 77b includes execution area information specifying each correction execution area and specifies the transparent correction target nozzles in relation to these correction execution areas. Note that, for any transparent individual correction area specified by the individual correction area information contained in the transparent correction target nozzle information 76b, when the number of pixels along the transportation direction contained in the any white individual correction area is less than or equal to twice the thinning number, no correction execution area is set for the any transparent individual correction area.

The transparent correction pattern generation portion 248b is configured to generate a transparent correction execution pattern 78b, which corresponds a pattern for the entire printing area as exemplified by the aforementioned template, based on the transparent correction execution area information 77b. The transparent correction execution pattern 78b consists of transparent individual correction execution patterns, which specify the transparent ink ejection patterns on a pixel-by-pixel basis within respective corresponding correction execution areas for the transparent individual correction areas in accordance with the templates. In the present embodiment, the region where transparent ink should be ejected based on the thus-generated transparent correction execution pattern 78b is treated as a transparent correction execution region within the entire printing area (referred to below as a "global transparent correction execution region"). In the following, a region that should be corrected using transparent ink in a printed image to be formed on the base material 12 based on the printing data is treated as a global transparent correction execution region, which includes the region where transparent ink should be ejected in accordance with the transparent correction execution pattern 78b. Specifically, transparent correction execution areas that correspond to areas where the defective nozzle should eject ink (i.e., a region with an image defect) within the entire printing area are collectively treated as a global transparent correction execution region. Accordingly, generating the transparent correction execution pattern 78b corresponds to determining the global transparent correction execution region. Note that the global transparent correction execution region will also be referred to below simply as the "global correction execution region" when there is no need for distinction from a global white correction execution region, which is previously described.

The ink ejection control portion 250 is configured to correct density data included in the printing data 74, and control ink ejection from each inkjet head 150 based on the corrected density data 82, as can be appreciated from FIG. 19. The ink ejection control portion 250 includes the first, second, and third correction process segments 2501, 2502, and 2503, as described above. The first correction process segment 2501 performs the process of correcting the density data in the printing data 74 when the determination results 75a and 75b, respectively outputted by the white correction determination portion 245a and the transparent correction determination portion 245b, indicate that neither white correction nor transparent correction should be executed. If the determination result 75a indicates that white correction should be executed for any individual correction area, the second correction process segment 2502 performs the process of correcting the density data in the printing data 74. If the determination result 75b indicates that transparent correction should be executed for any individual correction area, the third correction process segment 2503 performs the process of correcting the density data in the printing data 74.

The first correction process segment 2501 is configured to perform density uniformity correction and nozzle-defect correction based on the correction coefficient 71, the defective nozzle information 72, the determination result 75a, 75b, and the printing data 74. This corrects the density data in the printing data 74, resulting in density data 82 serving as normal correction density data for controlling ink ejection from each inkjet head 150.

The second correction process segment 2502 is configured to perform density uniformity correction, nozzle-defect correction, and white correction based on the correction coefficient 71, the defective nozzle information 72, the determination result 75a, the white correction execution pattern 78a, and the printing data 74. This corrects the density data in the printing data 74, resulting in density data 82 serving as white correction density data for controlling ink ejection from each inkjet head 150.

The third correction process segment 2503 is configured to perform density uniformity correction, nozzle-defect correction, and transparent correction based on the correction coefficient 71, the defective nozzle information 72, the determination result 75b, the transparent correction execution pattern 78b, and the printing data 74. This corrects the density data in the printing data 74, resulting in density data 82 serving as transparent correction density data for controlling ink ejection from each inkjet head 150.

Incidentally, the inkjet heads 150, such as the white inkjet head 150(W) and the transparent inkjet head 150(E), are capable of ejecting ink in different droplet sizes. Specifically, a piezo or piezoelectric element is provided for each nozzle in the inkjet heads 150, so that the droplet size of ink ejected through the nozzle can be changed by altering the voltage waveform of a drive signal applied to the piezo element. In the present embodiment, the second correction process segment 2502 performs density data correction such that white ink is ejected into the correction region in the smallest of the droplet sizes. That is, the ink ejection control portion 250 controls white ink ejection from the inkjet head 150(W) such that white ink is ejected into the correction region in the smallest of the droplet sizes. This prevents unnecessary white ink consumption when increasing the wetting spread ranges of color inks. However, white ink may be ejected into the correction region in droplet sizes other than the smallest. The ink ejection control portion 250 performs similar control for transparent ink ejection.

It should be noted that the time between ink ejection from the inkjet head 150 onto the base material 12 and curing through ultraviolet irradiation by the UV-LED array 159(c) varies from one color to another. Referring to FIG. 3, it can be appreciated that, for example, the time between black ink ejection from the inkjet head 150(K) onto the base material 12 and curing is noticeably shorter compared to blue ink ejected by the inkjet head 150(B). Therefore, when the droplet size of white ink ejected by the inkjet head 150(W) for white correction is kept constant, the wetting spread range of black ink is conceivably smaller compared to that of blue ink. Therefore, white ink ejection from the inkjet head 150(W) may be controlled such that the dot size of white ink increases as the distance between the UV-LED array 159(c) and the inkjet head 150 corresponding to the color ink that is to be ejected onto white ink in the white correction region decreases. For a similar reason, transparent ink ejection from the inkjet head 150(E) may be controlled such that the dot size of transparent ink increases as the distance between the UV-LED array 159(c) and the inkjet head 150 corresponding to the color ink that is to be ejected onto transparent ink in the transparent correction region decreases.

The UV-LED setting portion 249 is configured to control ultraviolet irradiation by the white ink UV-LED array 159(b) by providing the UV-LED array 159(b) with an ultraviolet irradiation control signal 79, based on the determination result 75a outputted by the white correction determination portion 245a. The UV-LED setting portion 249 also controls ultraviolet irradiation by the transparent ink UV-LED array 159(a) by providing the UV-LED array 159(a) with an ultraviolet irradiation control signal 79, based on the determination result 75b outputted by the transparent correction determination portion 245b. Specifically, when the determination result 75a indicates that white correction should be executed, the UV-LED setting portion 249 disables the UV-LED array 159(b) from performing ultraviolet irradiation. In addition, when the determination result 75b indicates that transparent correction should be executed, the UV-LED setting portion 249 disables the UV-LED array 159(a) from performing ultraviolet irradiation. Note that when the determination result 75a indicates that white correction should be executed, the UV-LED setting portion 249 may cause the UV-LED array 159(b) to perform ultraviolet irradiation at a reduced intensity. That is, the UV-LED array 159(b) is not necessarily disabled from performing ultraviolet irradiation on white ink, so long as the wetting spread range of color ink ejected onto white ink is sufficiently large. In this regard, the same applies to the UV-LED setting portion 249 disabling the UV-LED array 159(a) from performing ultraviolet irradiation when the determination result 75b indicates that transparent correction should be executed.

It should be noted that in the present embodiment, the calculation of the correction coefficient 71 by the correction coefficient calculation portion 241 and the identification of the defective nozzle by the defective nozzle detection portion 242 are performed based on the imaging data 70, but the present invention is not limited to this. In the case where the inkjet printing apparatus 10 is not equipped with the imaging portion 16, the calculation of the correction coefficient 71 and the identification of the defective nozzle may be performed by the operator visually inspecting a printed image of the inspection chart.

Furthermore, the base material determination portion 243 may be replaced by a component that allows the operator to input base material information 73, based on which the process (of determining whether to execute white correction) by the white correction determination portion 245a and the process (of determining whether to execute transparent correction) by the correction determination portion 245b are performed.

In the present embodiment, the white correction determination portion 245a, the white correction target nozzle specification portion 246a, the white correction end processing portion 247a, the white correction pattern generation portion 248a, the transparent correction determination portion 245b, the transparent correction target nozzle specification portion 246b, the transparent correction end processing portion 247b, and the transparent correction pattern generation portion 248b collectively serve a correction region determination portion, while the UV-LED setting portion 249 serves as an ultraviolet irradiation control portion.

<8.2 Correction Pattern Templates>

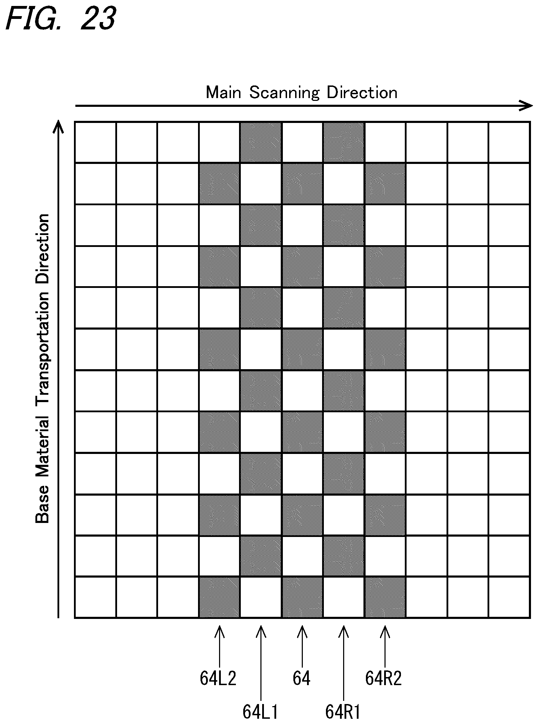

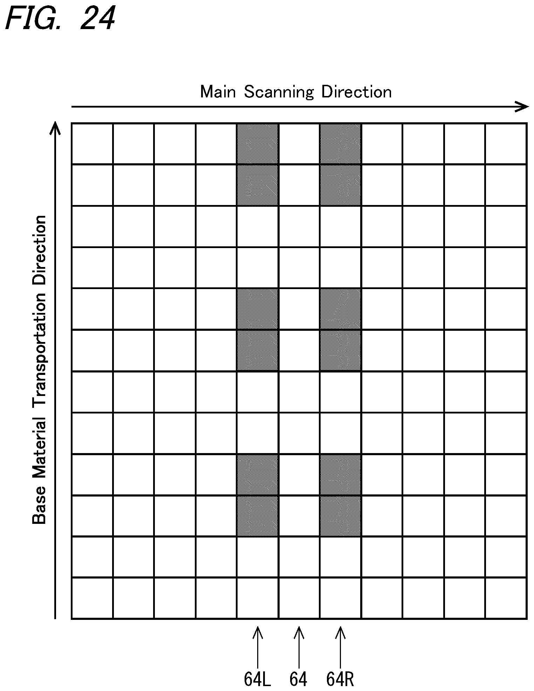

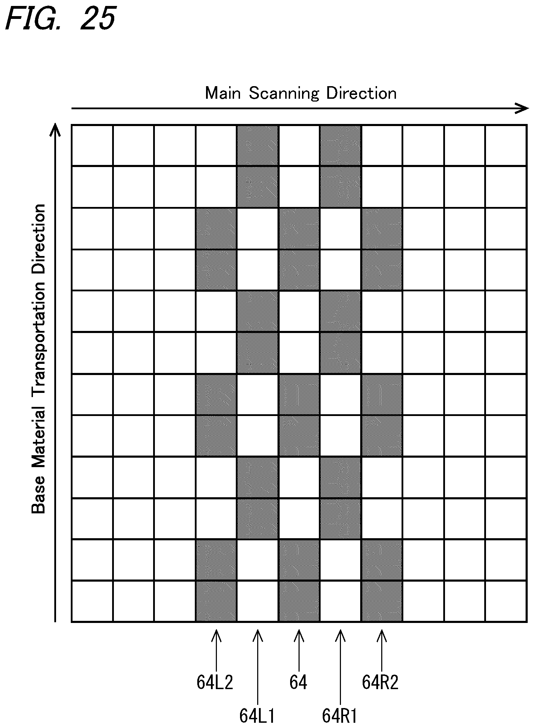

The white correction execution pattern 77a and the transparent execution correction pattern 77b have been described above as being generated by the white correction pattern generation portion 248a and the transparent correction pattern generation portion 248b, respectively, based on the template prepared as shown in FIG. 20. However, compatible templates are not limited to that shown in FIG. 20. For example, templates shown in FIGS. 24, 25, and 26 can also be employed. The templates shown in FIGS. 20 and 24 are templates corresponding to the individual correction area where three pixels are adjacent in the base material width direction. The templates shown in FIGS. 23 and 25 are templates corresponding to the individual correction area where five pixels are adjacent in the base material width direction. Moreover, templates other than those shown in FIGS. 20 and 23 to 25 can also be employed. To reliably ensure error margins for printing positions and the wetting spread ranges for white and transparent corrections, it is preferable to perform white or transparent printing at $\pm2$ pixels for the pixels corresponding to the defective nozzle and to perform color printing at $\pm1$ pixel with increased ink. Therefore, the templates shown in FIGS. 23 and 25 are preferred. Note that the correction target nozzles are specified using the templates as described above, and these templates can be used for both white correction and transparent correction. However, for the sake of convenience, the templates will be described below only in the context of white correction.

When the template shown in FIG. 20 or 24 is employed, the nozzles that eject ink at pixels in the columns denoted by reference numerals 64L and 64R are specified as white correction target nozzles among the numerous nozzles in the white inkjet head 150(W). When the template shown in FIG. 23 or 25 is employed, the nozzles that eject ink at pixels in the columns denoted by reference numerals 64, 64L1, 64R1, 64L2, and 64R2 are specified as white correction target nozzles among the numerous nozzles in the white inkjet head 150(W) .

Furthermore, when viewed in the transportation direction of the base material 12, one pixel where white ink is ejected alternates with one pixel where white ink is not ejected in the case of employing the template shown in FIG. 20 or 23, and two pixels where white ink is ejected alternate with two pixels where white ink is not ejected in the case of employing the template shown in FIG. 24 or 25.

<8.3 Procedure>

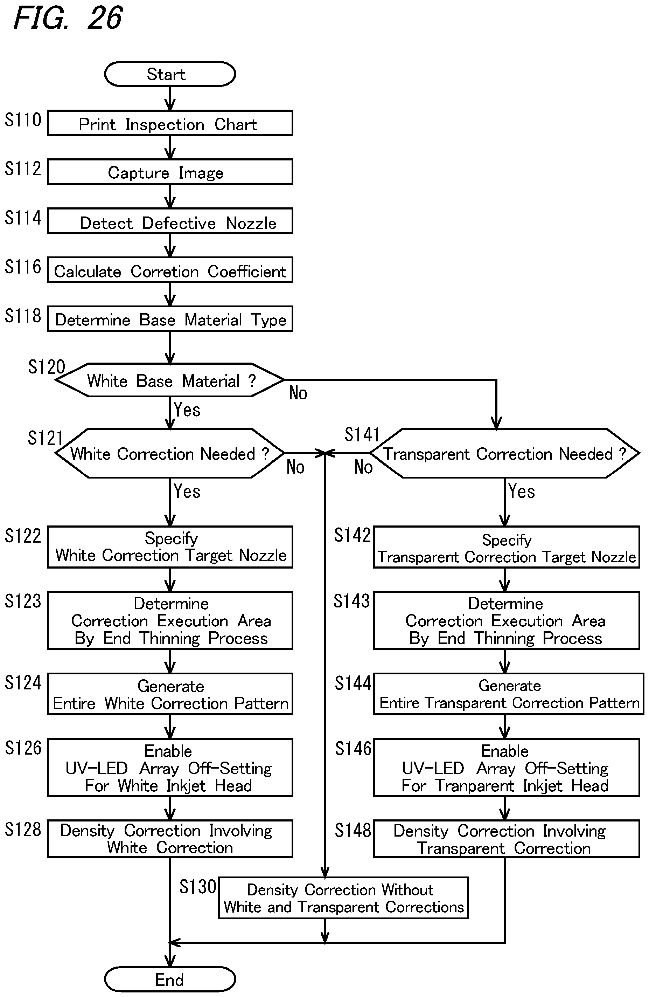

The procedure for density correction process in the present embodiment will be described below with reference to FIG. 26. Note that the process target printing data 74 to be processed is assumed to already be held in the printing data holding portion 244 (see FIG. 19).

In the present embodiment, the main part of the density correction process section 24 shown in FIG. 19 (excluding the components implemented by hardware) are implemented through software by the CPU 211 in the print controller 200 shown in FIG. 6 performing the density correction process described in the procedure shown in FIG. 26, in accordance with the printing control program P. In the density correction process, the CPU 211 operates as described below.

After the density correction process is started, the recording portion 15 and the transportation portion are initially controlled to print an inspection chart for checking the state of the nozzles in the color inkjet heads 150 (specifically, the blue, orange, cyan, magenta, yellow, and black inkjet heads 150(B), 150(O), 150(C), 150(M), 150(Y), and 150 (K)) (step S110). Then, the CPU 211 causes the imaging portion 16 to capture the resultant printed image of the inspection chart (step S112) and output imaging data 70.

Thereafter, based on the imaging data 70, a detection is made to determine whether the numerous nozzles in the color inkjet heads 150 include any defective nozzles (step S114). Next, based on the imaging data 70, a correction coefficient 71 for density uniformity correction is calculated (step S116).

After the calculation of the correction coefficient 71, the type of base material used for printing (i.e., the type of printing medium) is determined based on, for example, printing conditions being set, and base material information 73 specifying the base material is generated (step S118). Then, it is determined whether the base material is white based on the base material information 73 (step S120). When the base material is determined to be white, the process advances to step S121, and when the determination indicates otherwise, the process advances to step S141.

At step S121, the necessity of executing white correction is determined based on the printing data 74 and details of the defective nozzle detection from step S114 (i.e., defective nozzle information 72 as described earlier). Specifically, when the defective nozzle information 72 indicates that there is no defective nozzle, it is determined not to perform white correction. Conversely, when there is a defective nozzle, the necessity of executing white correction is determined based on the defective nozzle information 72 and the printing data 74, as described below.

Specifically, when the amount of ink for printing in a region where the defective nozzle and neighboring nozzles should eject ink onto the base material 12 (referred to below as a "determination target region") satisfies the following expressions (1a) and (1b) or expressions (2a) and (2b), white correction is determined to be executed, and when the determination indicates otherwise (either expression (1a) or (1b) is not satisfied as well as either expression (2a) or (2b) is not satisfied), white correction is determined not to be executed.

$$IA(C)+IA(M)+IA(Y)+IA(K)+IA(O)+IA(B) > CR1$$

$$...(1a)$$

$$IA(Z)/\{IA(C)+IA(M)+IA(Y)+IA(K)+IA(O)+IA(B)\} = 1$$

$$...(1b)$$

$$IA(C)+IA(M)+IA(Y)+IA(K)+IA(O)+IA(B) > CR2$$

$$...(2a)$$

$$1 > IA(Z)/\{IA(C)+IA(M)+IA(Y)+IA(K)+IA(O)+IA(B)\} > CR3$$

$$...(2b)$$

In the above expressions, IA(C), IA(M), IA(Y), IA(K), IA(O), and IA(B) indicate ink amounts of cyan, magenta, yellow, black, orange, and blue, respectively, represented as percentages, with the maximum ink amount per pixel being 100% for each color. Moreover, the letter Z denotes the color of ink, C, M, Y, K, O, or B, that should be ejected into the determination target region by the defective nozzle. Accordingly, IA(Z) indicates the ink amount that should be ejected into the determination target region by the defective nozzle. Moreover, in the above expressions, CR1, CR2, and CR3 indicate the first, second, and third determination criterion values, respectively, determined in advance as described earlier (see FIGS. 10 and 11). In the present embodiment, these determination criterion values are as follows:

$$CR1 = 60, \ CR2 = 90, \ CR3 = 0.6 \ ... \ (3)$$

In the present embodiment, the recording portion 150 includes the inkjet heads 150(O) and 150(B), which eject ink of the spot colors orange and blue, respectively, as shown in FIG. 3, in addition to the inkjet heads 150(C), 150(M), 150(Y), and 150(K), which eject ink of the process colors cyan, magenta, yellow, and black, but when the inkjet heads 150(O) and 150(B) for ejecting ink of the spot colors orange and blue are not included, the terms IA(O) and IA(B) in expressions (1a) to (2b) are omitted. Note that expressions (1a) and (1b) represent cases where the determination target region is a region where single-color high-density printing is performed using the color ink that should be ejected by the defective nozzle, while expressions (2a) and (2b) represent cases where the determination target region is a region where mixed-color high-density printing is performed using both the ink that should be ejected by the defective nozzle and another color ink.

The determination using expressions (1a) to (2b) is provided as the determination result 75a indicating the necessity of white correction for each determination target region established according to the defective nozzle. The determination result 75a includes individual correction area information and determination information. The individual correction area information specifies individual correction areas as described above (for example, areas AC1 to AC4 shown in FIG. 17) within the determination target regions. The determination information specifies the necessity of white correction for each individual correction area. When the determination result 75a indicates that white correction needs to be executed for any individual correction area, the process advances to step S122, and when white correction is not necessary for each individual correction area, the process advances to step S130. Note that when there is a defective nozzle but white correction is determined not to be executed, normal nozzle-defect correction is performed at step S130, as will be described later.

At step S122, based on the individual correction area information and the determination information contained in the determination result 75a, as well as details of the defective nozzle detection from step S114 (i.e., the defective nozzle information 72), white correction target nozzles, as described earlier, are identified, resulting in generation of white correction target nozzle information 76a. The white correction target nozzle information 76a includes the individual correction area information and specifies the white correction target nozzles in relation to the white individual correction areas.

Thereafter, based on the individual correction area information contained in the white correction target nozzle information 76a, the end thinning process (see FIG. 17) is performed for each white individual correction area (i.e., each individual correction area that requires white correction), thereby determining a correction execution area (i.e., a white correction execution area) for each white individual correction area, resulting in outputting of white correction execution area information 77a (step S123). The white correction execution area information 77a includes execution area information specifying each correction execution area and specifies the white correction target nozzles in relation to these correction execution areas (i.e., the white correction execution areas). Note that, for any white individual correction area specified by the individual correction area information contained in the white correction target nozzle information 76a, when the number of pixels along the transportation direction contained in the white individual correction area is less than or equal to twice the thinning number, no correction execution area is set for that white individual correction area.

Next, based on the white correction execution area information 77a, a white correction execution pattern 78a, as described earlier, is generated (step S124). In other words, there is determined as a global white correction execution region a region where white ink should be ejected to increase the wetting spread ranges of color inks within the entire printing area over the base material 12.

After the white execution pattern 78a is generated, the white ink UV-LED array 159(b) is either disabled from ultraviolet irradiation or allowed to perform only weak ultraviolet irradiation based on the determination result 75a obtained at step S121 (step S126). Specifically, when white correction is performed, the UV-LED array 159(b) is either disabled from ultraviolet irradiation or allowed to perform only weak ultraviolet irradiation on the white ink ejected onto the base material 12 by the inkjet head 150(W), as described earlier.

After the UV-LED array 159(b) is either disabled from ultraviolet irradiation or allowed to perform only weak ultraviolet irradiation, density uniformity correction, nozzle-defect correction, and white correction, as described earlier with reference to FIGS. 33, 7, and 8, respectively, are performed based on the correction coefficient 71 calculated at step S116, the defective nozzle information 72 obtained at step S114, the determination result 75a obtained at step S121, the white correction execution pattern 78a generated at step S124, and the printing data 74 (step S128).

When the determination at step S120 indicates that the base material 12 used for printing is not white, the process advances to step S141, where it is determined whether transparent correction needs to be executed, based on the printing data 74 and the defective nozzle information 72. Specifically, when the defective nozzle information 72 indicates that there is no defective nozzle, transparent correction is determined not to be executed. When the defective nozzle information 72 indicates that there is a defective nozzle, similar to step S121 described above, the necessity for executing transparent correction is determined based on the defective nozzle information 72 and the printing data 74.

More specifically, transparent correction is determined to be executed when the amount of ink for printing in the region where the defective nozzle and neighboring nozzles eject ink (i.e., the determination target region) satisfies expressions (1a) and (1b) or expressions (2a) and (2b). When otherwise indicated, transparent correction is determined not to be executed. Note that the first, second, and third determination criterion values CR1, CR2, and CR3 in these expressions are obtained for transparent correction using a method similar to that described earlier for obtaining the first, second, and third determination criterion values (see FIGS. 10 and 11) used at step S121. That is, instead of using the method described earlier to form a white correction printed image based on corrected printing data resulting from white correction, corrected printing data resulting from transparent correction is used to form a transparent correction printed image, thereby determining in advance the first, second, and third determination criterion values CR1, CR2, and CR3 for transparent correction, which respectively correspond to the first, second, and third determination criterion values CR1, CR2, and CR3 used at step S121. At step S141, these first, second, and third determination criterion values CR1, CR2, and CR3 for transparent correction are used in expressions (1a) to (2b) to determine the necessity for executing transparent correction.

The determination at step S141 is provided as the determination result 75b indicating the necessity of transparent correction for each determination target region established according to the defective nozzle. The determination result 75b includes individual correction area information and determination information. The individual correction area information specifies individual correction areas as described above (for example, areas AC1 to AC4 shown in FIG. 17) within the determination target regions. The determination information specifies the necessity of transparent correction for each individual correction area. When the determination result 75b indicates that transparent correction needs to be executed for any individual correction area, the process advances to step S142, and when transparent correction is not necessary for each individual correction area, the process advances to step S130. Note that when there is a defective nozzle but transparent correction is determined not to be executed, normal nozzle-defect correction is performed at step S130, as will be described later.

At step S142, based on the individual correction area information and the determination information contained in the determination result 75b, as well as the defective nozzle information 72, transparent correction target nozzles, as described earlier, are identified, resulting in generation of transparent correction target nozzle information 76b. The transparent correction target nozzle information 76b includes the individual correction area information and specifies the transparent correction target nozzles in relation to the transparent individual correction areas.

Thereafter, based on the individual correction area information contained in the transparent correction target nozzle information 76b, the end thinning process (see FIG. 17) is performed for each transparent individual correction area (i.e., each individual correction area that requires transparent correction), thereby determining a correction execution area (i.e., a transparent correction execution area) for each transparent individual correction area, resulting in outputting of transparent correction execution area information 77b (step S143). The transparent correction execution area information 77b includes execution area information specifying each correction execution area and specifies the transparent correction target nozzles in relation to these correction execution areas (i.e., the transparent correction execution areas). Note that, for any transparent individual correction area specified by the individual correction area information contained in the transparent correction target nozzle information 76b, when the number of pixels along the transportation direction contained in the transparent individual correction area is less than or equal to twice the thinning number, no correction execution area is set for that transparent individual correction area.

Next, based on the transparent correction execution area information 77b, a transparent correction execution pattern 78b, as described earlier, is generated (step S144). In other words, there is determined as a global transparent execution region a region where transparent ink should be ejected to increase the wetting spread ranges of color inks within the entire printing area over the base material 12.

After the transparent execution pattern 78b is generated, the transparent ink UV-LED array 159(a) is either disabled from ultraviolet irradiation or allowed to perform only weak ultraviolet irradiation based on the determination result 75b obtained at step S141 (step S146). Specifically, when transparent correction is performed, the UV-LED array 159(a) is either disabled from ultraviolet irradiation or allowed to perform only weak ultraviolet irradiation on the transparent ink ejected onto the base material 12 by the inkjet head 150(E), as described earlier.

After the UV-LED array 159(a) is either disabled from ultraviolet irradiation or allowed to perform only weak ultraviolet irradiation, density uniformity correction, nozzle-defect correction, and transparent correction, as described earlier, are performed based on the correction coefficient 71 calculated at step S116, the defective nozzle information 72 obtained at step S114, the determination result 75b obtained at step S141, the transparent correction execution pattern 78b generated at step S144, and the printing data 74 (step S148).

When transparent correction is determined not to be executed, the process advances to step S130, similar to the case of white correction described earlier (see steps S121 and S141). At step S130, density uniformity correction and normal nozzle-defect correction are performed based on the defective nozzle information 72 obtained at step S114, the correction coefficient 71 calculated at step S116, the determination result 75a or 75b respectively obtained at step S121 or S141, and the printing data 74 (see FIG. 33).

The procedure for density correction ends with the processing at step S128, S130, or S148.

In the density correction process during which the CPU 211 operates as described above, step S114 implements the defective nozzle detection portion 242, step S116 implements the correction coefficient calculation portion 241, step S118 implements the base material determination portion 243, steps S120 and S121 implement the white correction determination portion 245a, step S122 implements the white correction target nozzle specification portion 246a, step S123 implements the white correction end processing portion 247a, step S124 implements the white correction pattern generation portion 248a, steps S120 and S141 implement the transparent correction determination portion 245b, step S142 implements the transparent correction target nozzle specification portion 246b, step S143 implements the transparent correction end processing portion 247b, step S144 implements the transparent correction pattern generation portion 248b, steps S126 and S146 implement the UV-LED setting portion 249, step S128 implements the second correction process segment 2502, step S148 implements the third correction process segment 2503, and step S130 implements the first correction process segment 2501 (see FIG. 19). Note that the ink ejection control portion 250 is implemented by a known process for controlling the recording portion 15 and the transportation portion to perform printing in accordance with the printing control program P, step S130 implementing the first correction process segment 2501, step S128 implementing the second correction process segment 2501, and step S148 implementing the third correction process segment 2503.

After performing the density correction process in the above procedure, the CPU 211 controls ink ejection from each inkjet head 150 and base material transportation by the transportation portion based on density data 82 obtained through the density correction process, in accordance with the printing control program P, thereby executing actual printing on the base material 12. At this time, as can be seen from FIG. 3, the ink ejection onto the base material 12 occurs in the following order: white ink, blue ink, orange ink, cyan ink, magenta ink, yellow ink, and black ink. For example, if a cyan inkjet nozzle is detected to be a defective nozzle, white ink is initially ejected into the white correction region on the base material 12, followed by ejection of cyan ink onto the white ink. In the case of the transparent correction region, transparent ink is initially ejected onto the base material 12, followed by ejection of cyan ink onto the transparent ink.

<9. Effects>

In the present embodiment, when the base material 12 used for printing is white, white correction (i.e., nozzle-defect correction using white ink) is performed in regions where nozzle-defect correction should be executed, and when the base material 12 is not white, transparent correction (i.e., nozzle-defect correction using transparent ink) is performed in regions where nozzle-defect correction should be executed (see FIG. 26). However, as can be appreciated from the foregoing, similar effects can be achieved regardless of whether white correction or transparent correction is performed (see FIGS. 7, 8, 9, 12, 13, and 26). Therefore, the effects of the present embodiment will be described below, focusing only on white correction.

In the present embodiment, white correction is performed on density data such that white inkjet nozzles corresponding to defect-adjacent nozzles eject white ink in the correction execution areas set in a portion that undergoes single-color high-density printing using color ink that should be ejected by a defective nozzle detected in the color inkjet head 150, within a region where the defective nozzle and neighboring nozzles should eject ink onto the base material 12. Here, the wetting spread range of the color ink on the base material 12 is larger when the color ink is ejected onto white ink that has been ejected onto the base material 12 than when the color ink is ejected directly onto the base material 12. Accordingly, each inkjet head 150 ejects ink based on density data subjected to white correction, ensuring that the color ink spreads sufficiently on the base material 12 in the region targeted for white correction, thereby enhancing the effect of nozzle-defect correction (i.e., suppressing the occurrence of image defects caused by the defective nozzle and preventing reduced printing quality) compared to that conventionally achieved. That is, even when there is a defective nozzle corresponding to a region that undergoes single-color high-density printing, printed image quality reduction caused by the defective nozzle can be effectively mitigated.

Furthermore, when nozzle-defect correction should be performed in the region that undergoes single-color printing, whether to perform normal nozzle-defect correction or white correction (nozzle-defect correction using white ink) is determined based on the determination criterion value established in advance for the total area coverage corresponding to the density of the single-color region (i.e., the first determination criterion value; see expressions (1a) and (1b)), with the result that suitable nozzle-defect correction is performed in accordance with the density of the printed image, minimizing unnecessary white ink consumption. Note that the color of the ink (i.e., white ink) used for increasing the wetting spread range of the color ink is the same as the color of the base material 12. Accordingly, the color of the ink ejected onto the base material 12 to increase the wetting spread range of the color ink is not noticeable on the printed image.

Furthermore, in the above embodiment, when nozzle-defect correction should be performed to suppress the occurrence of image defects caused by the defective nozzle in the mixed-color region, white correction is also performed if both the total area coverage, which corresponds to the density of the mixed-color region, and the defective nozzle ink amount percentage are high. In this case, whether to perform normal nozzle-defect correction or white correction is determined based on the determination criterion value established in advance for the total area coverage (i.e., the second determination criterion value) and the determination criterion value established in advance for the defective nozzle ink amount percentage (i.e., the third determination criterion value) (see expressions (2a) and (2b) described earlier). This enables suitable nozzle-defect correction to be performed in accordance with the total area coverage and the defective nozzle ink amount percentage. Thus, white correction is applied to the mixed-color region under appropriate conditions, enhancing the effect of nozzle-defect correction compared to conventional practices, while avoiding excessive correction through white correction and unnecessary white ink consumption.

Furthermore, in the present embodiment, the end thinning process (see FIG. 17) is performed for each white individual correction area, resulting in white correction execution areas constituting a global white correction execution region, which undergoes white correction (i.e., nozzle-defect correction using white ink) (see FIG. 26). This makes it possible to inhibit the wetting spread range of color ink ejected at ends of the individual correction areas (for example, areas AC1 to AC4 shown in FIG. 17) in the transportation direction from exceeding the boundaries of the individual correction areas. Thus, even when printing an image that includes narrow linear patterns such as characters or barcodes, it is possible to mitigate the reduction in printed image quality due to ink bleeding caused by white correction (see FIG. 18).

In the present embodiment, when nozzle-defect correction should be performed to suppress the occurrence of image defects caused by the defective nozzles in both the single-color and mixed-color regions, whether to perform normal nozzle-defect correction or white or transparent correction (determined depending on whether the base material is white) is appropriately determined based on the predetermined determination criterion values, as described above, and therefore white or transparent correction is performed under appropriate conditions. Moreover, white or transparent ink is ejected as a correction aid ink only in correction execution areas resulting from the end thinning process being performed for each individual correction area where white or transparent correction is determined to be necessary, and therefore even when printing an image that includes narrow linear patterns such as characters or barcodes, it is possible to effectively perform nozzle-defect correction while mitigating the reduction in printed image quality due to ink bleeding caused by white or transparent correction. Such nozzle-defect correction involving white or transparent correction allows the inkjet printing apparatus 10 to produce high-quality print products. Moreover, the reduction in printed image quality caused by the defective nozzles can be appropriately and effectively mitigated, resulting in a reduced necessity of reprinting and reduced consumption of the base material and ink compared to conventional practices. This contributes to efforts in achieving sustainable development goals (SDGs).

<10. Variants>

<10.1 First Variant>

In the embodiment, for regions that should undergo nozzle-defect correction, white correction (i.e., nozzle-defect correction using white ink) is performed when the base material 12 used for printing is white, while transparent correction (i.e., nozzle-defect correction using transparent ink) is performed when the base material 12 is not white (see FIG. 26). However, if it is unnecessary to consider cases where the base material 12 is not white, the components related to transparent correction in the embodiment may be omitted. An inkjet printing apparatus that omits the transparent correction-related components in the embodiment will be described below as a first variant of the embodiment.

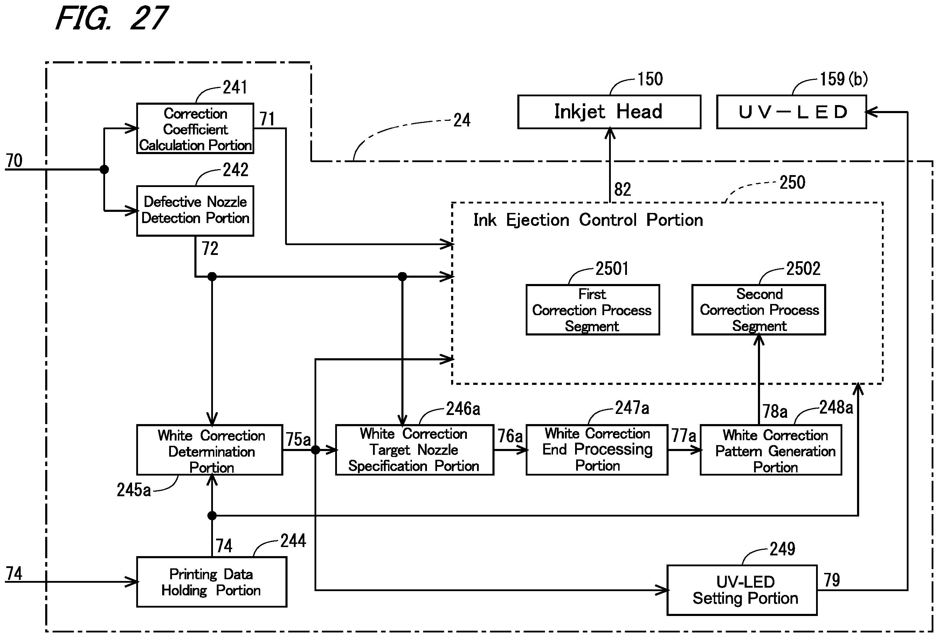

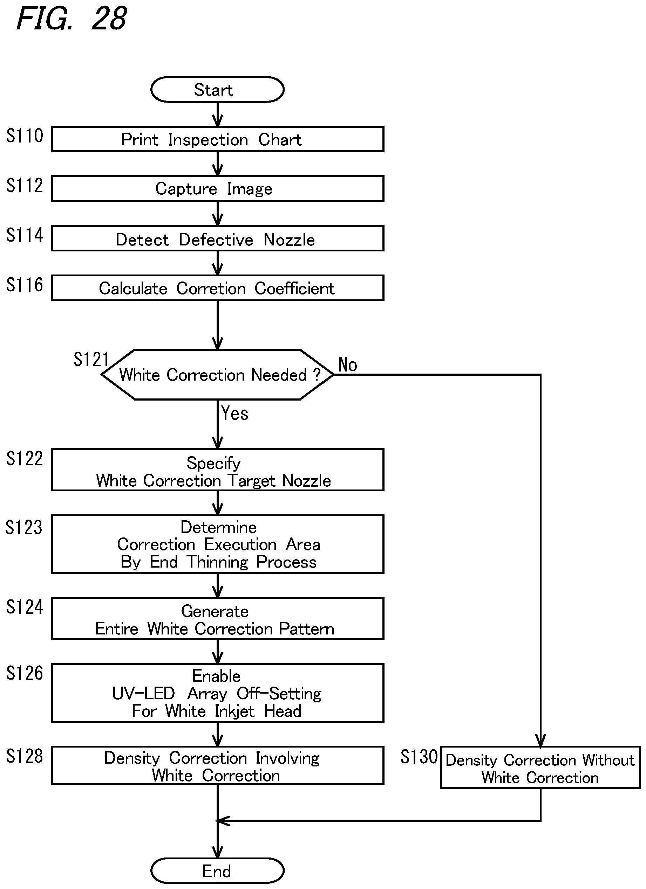

In the present variant, the base material determination portion 243, the transparent correction determination portion 245b, the transparent correction target nozzle specification portion 246b, the transparent correction end processing portion 247b, the transparent correction pattern generation portion 248b, and the third correction process segment 2503 are removed from the functional configuration of the density correction process section 24 in the embodiment shown in FIG. 19, and the UV-LED setting portion 249 is not required to control the UV-LED array 159(a). Therefore, in the present variant, the density correction process section 24 is configured as shown in FIG. 27. Moreover, in the present variant, steps S118, S120, and S141 to S148 are removed from the procedure for density correction process in the embodiment shown in FIG. 26, resulting in the procedure shown in FIG. 28.

When the present variant, as described above, does not consider using non-white base materials as printing media, whether to perform normal nozzle-defect correction or white correction is appropriately determined for both the single-color and mixed-color regions that should undergo nozzle-defect correction. This determination is based on predetermined determination criterion values, resulting in white correction under appropriate conditions and achieving similar effects to those in the above embodiment. Moreover, white ink is ejected as a correction aid ink only in correction execution areas resulting from the end thinning process being performed for each individual correction area where white correction is determined to be necessary, and therefore even when printing an image that includes narrow linear patterns such as characters or barcodes, it is possible to effectively perform nozzle-defect correction while mitigating the reduction in printed image quality due to ink bleeding caused by white correction.

<10.2 Second Variant>

In the embodiment, for regions that should undergo nozzle-defect correction, white correction (nozzle-defect correction using white ink) is performed when the base material 12 used for printing is white, while transparent correction (i.e., nozzle-defect correction using transparent ink) is performed when the base material 12 is not white (see FIG. 26). However, when it is not necessary to consider cases where the base material 12 is white, the components related to white correction in the embodiment may be omitted. An inkjet printing apparatus that omits the white correction-related components in the embodiment will be described below as a second variant of the embodiment.

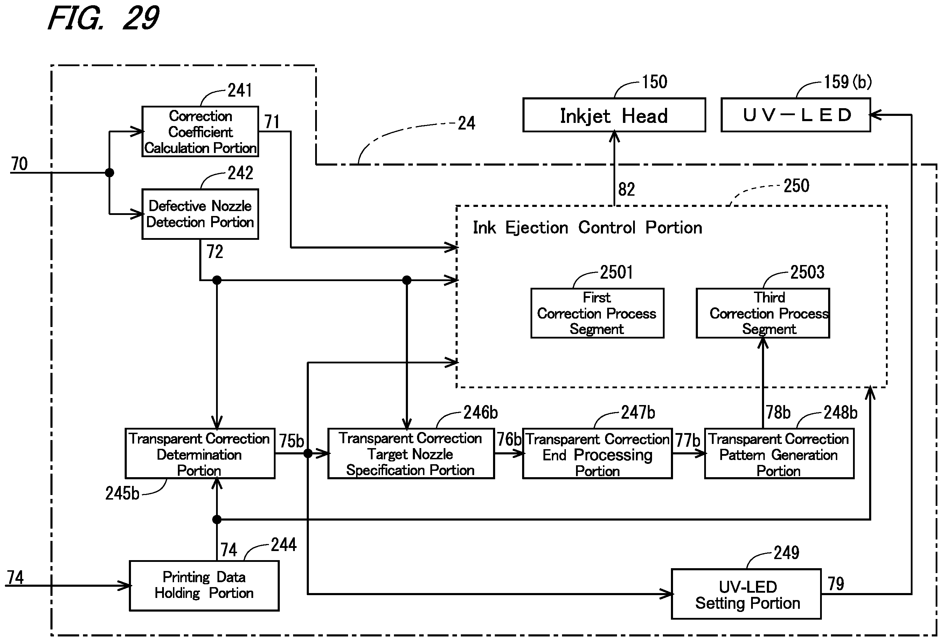

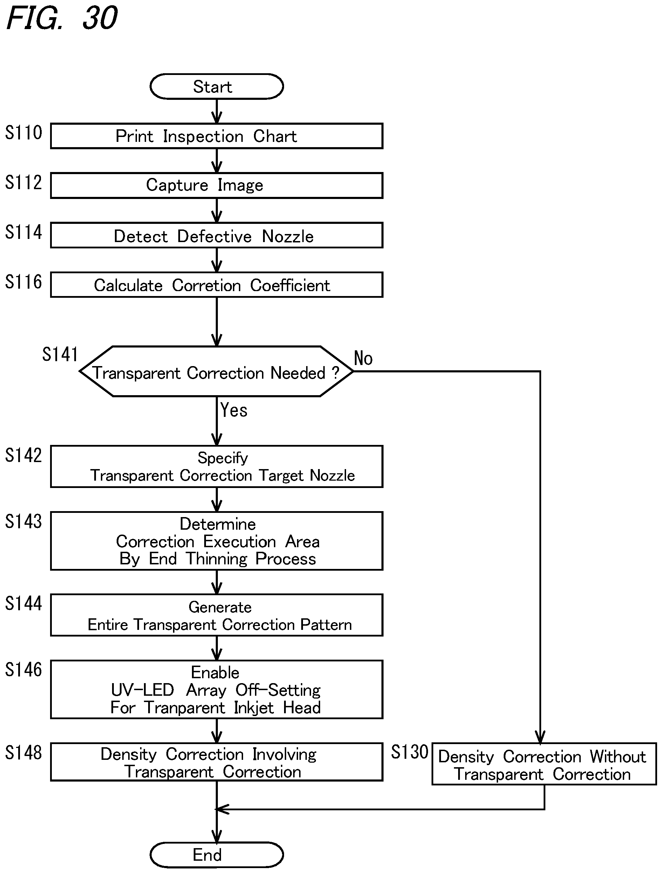

In the present variant, the base material determination portion 243, the white correction determination portion 245a, the white correction target nozzle specification portion 246a, the white correction end processing portion 247a, the white correction pattern generation portion 248a, and the second correction process segment 2502 are removed from the functional configuration of the density correction process section 24 in the embodiment shown in FIG. 19, and the UV-LED setting portion 249 is not required to control the UV-LED array 159(b). Therefore, in the present variant, the density correction process section 24 is configured as shown in FIG. 29. Moreover, in the present variant, steps S118, S120, and S121 to S128 are removed from the procedure for density correction process (i.e., the density correction process) in the embodiment shown in FIG. 26, resulting in the procedure shown in FIG. 30.

When the present variant, as described above, does not consider using base materials that are white as printing media, whether to perform normal nozzle-defect correction or transparent correction is appropriately determined for both the single-color and mixed-color regions that should undergo nozzle-defect correction, based on predetermined determination criterion values, resulting in transparent correction under appropriate conditions and achieving similar effects to those in the embodiment. Moreover, transparent ink is ejected as a correction aid ink only in correction execution areas resulting from the end thinning process being performed for each individual correction area where transparent correction is determined to be necessary, and therefore even when printing an image that includes narrow linear patterns such as characters or barcodes, it is possible to effectively perform nozzle-defect correction while mitigating the reduction in printed image quality due to ink bleeding caused by transparent correction.

<10.3 Third Variant>

In the embodiment, to increase the wetting spread ranges of color inks on the base material 12 through nozzle-defect correction, white or transparent ink is ejected as a correction aid ink onto the base material 12 in correction regions, depending on whether the base material 12 is white or not, before the color inks are ejected. However, the present invention is not limited to this. Accordingly, to increase the wetting spread ranges of the color inks, inks other than white and transparent inks may conceivably be used as a correction aid ink. Moreover, when a black inkjet nozzle is a defective nozzle, it is conceivable to use yellow ink to enhance the effect of nozzle-defect correction, as described below. A third variant of the embodiment will be described below, taking an example of using yellow ink as a correction aid ink to increase the wetting spread range of black ink, without involving white correction as in the embodiment.

In the present variant, when a black inkjet nozzle is a defective nozzle, yellow ink, which has a higher brightness value than black ink, is ejected onto the base material 12 in correction regions before black ink is ejected, to enhance the effect of nozzle-defect correction. Moreover, instead of performing white correction as in the embodiment, the process of correcting density data is performed such that the inkjet head 150(Y) ejects yellow ink to increase the wetting spread range of black ink (this process will be referred to below as "yellow correction").

It should be noted that the regions where yellow ink is ejected to enhance the effect of nozzle-defect correction are limited to those excluding the regions where yellow ink is ejected to form a printed image. Limiting the regions where yellow ink is ejected in this manner prevents a reduction in printing quality caused by using yellow ink to increase the wetting spread range of black ink.

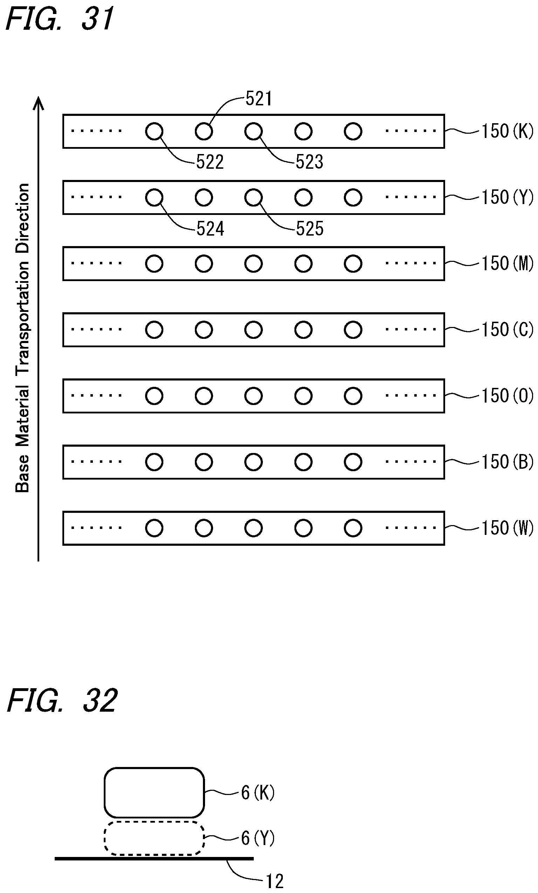

Here, it is assumed that among the numerous nozzles in the black inkjet head 150(K), the nozzle denoted by reference numeral 521 in FIG. 31 is a defective nozzle. In this case, when nozzle-defect correction, as described above, is performed, the defect-adjacent nozzles (denoted by reference numerals 522 and 523) eject black ink more than originally intended. Moreover, when yellow correction is performed, the yellow inkjet nozzles (denoted by reference numerals 524 and 525) corresponding to the defect-adjacent nozzles eject yellow ink.

When yellow correction is performed, the yellow inkjet nozzles corresponding to the defect-adjacent nozzles initially eject yellow ink onto the base material 12 during printing. Thereafter, the defect-adjacent nozzles eject black ink. That is, in the regions subjected to yellow correction, black ink 6(K) is ejected onto yellow ink 6(Y) that has been ejected onto the base material 12, as schematically shown in FIG. 32.

In another example, when a black inkjet nozzle is a defective nozzle, blue ink, which barely differs in color from black ink, may be ejected as a correction aid ink onto the base material 12 in correction regions before black ink is ejected, to enhance the effect of nozzle-defect correction. In such a case, instead of performing white correction as in the embodiment, the process of correcting density data may be performed such that the inkjet head 150(B) ejects blue ink to increase the wetting spread range of black ink (this process will be referred to below as "blue correction"), thereby allowing ejection control similar to that used in yellow correction.

In the present variant, neither white nor transparent ink is used. Accordingly, applying the configuration of the present variant to an inkjet printing apparatus that uses only process-color ink for printing also effectively suppresses the occurrence of image defects (such as density decreases appearing as streaks due to dot missing) in printed images caused by the presence of defective black inkjet nozzles. Moreover, yellow or blue ink is ejected as a correction aid ink only in correction execution areas resulting from the end thinning process being performed for each individual correction area (for example, each of the areas AC1 to AC4 shown in FIG. 17) where yellow or blue correction is determined to be necessary, and therefore even when printing an image that includes narrow linear patterns such as characters or barcodes, it is possible to effectively perform nozzle-defect correction while mitigating the reduction in printed image quality due to ink bleeding caused by yellow or blue correction.

<11. Others>

The present invention is not limited to the embodiments and the variants, and various modifications can be made without departing from the spirit of the invention. For example, while the embodiments are directed to the inkjet printing apparatus 10 performing printing with UV ink, the present invention can also be applied to an inkjet printing apparatus that use ink being curable through irradiation other than ultraviolet.

Furthermore, in the embodiments, the inkjet printing apparatus is of a so-called single-pass type, which forms printed images on the base material by ejecting ink through the inkjet heads while transporting the base material toward the inkjet heads. However, the present invention can also be applied to an inkjet printing apparatus of a so-called shuttle type, which form printed images on the base material by ejecting ink through the inkjet heads while moving the inkjet heads relative to the base material. In the latter case, the transportation portion for conveying the printing medium also serves as the means for moving the inkjet heads relative to the base material.

Furthermore, in the embodiments, white correction is performed when the base material is white, while transparent correction is performed when the base material is not white. However, transparent correction may also be performed on white base materials. Specifically, depending on the printing apparatus, the recording portion 15 includes the inkjet head 150(E) for ejecting transparent ink and the UV-LED array 159(a) for curing the transparent ink but includes neither the inkjet head 150(W) for ejecting white ink nor the UV-LED array 159(b) for curing the white ink. In such a case, the same processing as that performed at step S141 in FIG. 26 is carried out to determine whether transparent correction needs to be executed, based on the printing data 74 and the details of defective nozzle detection at step S114 (i.e., the defective nozzle information 72).

While the embodiments and the variants have been described above to disclose the present invention, the foregoing description is illustrative in all respects and not restrictive. It is understood that numerous other modifications and variations can be devised without departing from the scope of the invention. Additionally, the above embodiment and the variants thereof may be combined within the range that does not contradict the spirit of the invention and is not technically inconsistent.

**Claims**

1. A printing apparatus (10) for forming a printed image on a printing medium (12) by ejecting ink onto the printing medium (12) based on printing data, comprising:

   a recording portion (15) configured to eject a plurality of types of inks onto the printing medium (12), the plurality of types of inks including a first ink and a correction aid ink;
   a transportation portion (13, 14, 17) configured to move the printing medium (12) relative to the recording portion (15);
   an ejection control portion (250) configured to control the ejection of the plurality of types of inks by the recording portion (15); and
   a correction region determination portion (245a-248a, 245b-248b) configured to determine a correction region (AC1-AC4) in the printed image to be formed on the printing medium (12), the correction region (AC1-AC4) consisting of one or more continuous areas to be corrected using the correction aid ink, wherein,
   the transportation portion (13, 14, 17) includes a mechanism configured to move the printing medium (12) relative to the recording portion (15) in a predetermined transportation direction perpendicular to a width direction of the printing medium (12) and parallel to the printing medium (12),
   the recording portion (15) includes:

   a first inkjet head (150(B), 150(O), 150(C), 150(M), 150(Y), 150(K)) including a plurality of ink ejection ports (152) for ejecting the first ink (150(B), 150(O), 150(C), 150(M), 150(Y), 150(K)); and
   a correction aid inkjet head (150(W), 150(E)) including a plurality of ink ejection ports (152) for ejecting the correction aid ink, the correction aid inkjet head (150(W), 150(E)) being disposed upstream of the first inkjet head (150(B), 150(O), 150(C), 150(M), 150(Y), 150(K)) when viewed in the transportation direction,

   the first ink has a larger wetting spread range on the printing medium (12) when the first ink is ejected onto the correction aid ink on the printing medium (12) than when the first ink is ejected directly onto the printing medium (12),
   when any continuous area included in the correction region (AC1-AC4) contains more pixels in the transportation direction than twice a predetermined thinning number, the correction region determination portion (245a-248a, 245b-248b) determines a correction execution area (AD1, AD4) for the any continuous area by removing pixel rows corresponding to the thinning number from each of opposite ends of the any continuous area in the transportation direction, and
   the ejection control portion (250) controls the first inkjet head (150(B), 150(O), 150(C), 150(M), 150(Y), 150(K)) and the correction aid inkjet head (150(W), 150(E)) to eject the correction aid ink into the correction execution area (AD1, AD4) before ejecting the first ink into the correction execution area (AD1, AD4) to form the printed image.

2. The printing apparatus (10) according to claim 1, wherein, for any continuous area included in the correction region (AC1-AC4), when the number of pixels along the transportation direction contained in the any continuous area is less than or equal to twice the thinning number, the ejection control portion (250) controls the correction aid inkjet head (150(W), 150(E)) to refrain from ejecting the correction aid ink into the any continuous area.

3. The printing apparatus (10) according to claim 1, wherein the thinning number is one or two.

4. The printing apparatus (10) according to claim 1, wherein the correction region determination portion (245a-248a, 245b-248b) determines the correction region (AC1-AC4) based on a position of a defective ink ejection port that is an ink ejection port having ejection failure among the ink ejection ports (152) included in the first inkjet head (150(B), 150(O), 150(C), 150(M), 150(Y), 150(K)).

5. The printing apparatus (10) according to claim 4, wherein the correction region determination portion (245a-248a, 245b-248b) determines the correction region (AC1-AC4) based on the printing data in such a manner to include a rectangular continuous area defined by a transportation direction range and a width direction range, the transportation direction range being determined by consecutive missing pixels in the transportation direction, the missing pixels being pixels that should have been formed on the printing medium (12) by ink ejected through the defective ink ejection port, the width direction range being determined by a predetermined number of adjacent pixels aligned in the width direction with a missing pixel centered.

6. The printing apparatus (10) according to claim 5, wherein the correction region determination portion (245a-248a, 245b-248b) determines the correction region (AC1-AC4) such that the width direction range of the rectangular continuous area is determined by three or five adjacent pixels aligned in the width direction with the missing pixel centered.

7. The printing apparatus (10) according to claim 4, wherein the correction region determination portion (245a-248a, 245b-248b) determines the correction execution area (AD1, AD4) such that one pixel where the correction aid ink is ejected alternates with one pixel where the correction aid ink is not ejected when viewed in the transportation direction.

8. The printing apparatus (10) according to claim 4, wherein the correction region determination portion (245a-248a, 245b-248b) determines the correction execution area (AD1, AD4) such that two pixels where the correction aid ink is ejected alternate with two pixels where the correction aid ink is not ejected when viewed in the transportation direction.

9. The printing apparatus (10) according to any one of claims 1 through 8, wherein,

   the recording portion (15) further includes a second inkjet head (150(B), 150(O), 150(C), 150(M), 150(Y), 150(K)) including a plurality of ink ejection ports (152) for ejecting a second ink, the second inkjet head (150(B), 150(O), 150(C), 150(M), 150(Y), 150(K)) being disposed downstream of the correction aid inkjet head (150(W), 150(E)) when viewed in the transportation direction,
   the second ink has a larger wetting spread range on the printing medium (12) when the second ink is ejected onto the correction aid ink on the printing medium (12) than when the second ink is ejected directly onto the printing medium (12),
   if the first and second inks are ejected so as to mix, the wetting spread ranges of the first and second inks on the printing medium (12) are larger when the first and second inks are ejected onto the correction aid ink on the printing medium (12) than when the first and second inks are ejected directly onto the printing medium (12), and
   the ejection control portion (250) controls the second inkjet head (150(B), 150(O), 150(C), 150(M), 150(Y), 150(K)) and the correction aid inkjet head (150(W), 150(E)) to eject the correction aid ink into the correction execution area (AD1, AD4) before ejecting the second ink into the correction execution area (AD1, AD4) to form the printed image.

10. The printing apparatus (10) according to claim 9, wherein,

   when the correction region (AC1-AC4) is a single-color region where either the first or second ink is ejected, the correction region determination portion (245a-248a, 245b-248b) determines the correction region (AC1-AC4) based on the printing data in such a manner to include only a portion where an amount of the ejected ink is higher than a predetermined first determination criterion value, and
   when the correction region (AC1-AC4) is a mixed-color region where both the first and second inks are ejected so as to mix in colors, the correction region determination portion (245a-248a, 245b-248b) determines the correction region (AC1-AC4) based on the printing data in such a manner to include only a portion where the first and second inks are ejected with a total area coverage higher than a predetermined second determination criterion value and where an amount of ink in the color from either the first or second inkjet head (150(B), 150(O), 150(C), 150(M), 150(Y), 150(K)) that includes an ink ejection port having ejection failure is higher in percentage relative to the total area coverage than a predetermined third determination criterion value.

11. The printing apparatus (10) according to any one of claims 1 through 8, wherein the plurality of types of inks are ultraviolet-curable inks.

12. The printing apparatus (10) according to claim 11, further comprising:

   a first ultraviolet irradiation portion (159(c)) configured to cure any ink ejected from the recording portion (15) among the plurality of types of inks other than the correction aid ink through ultraviolet irradiation;
   a second ultraviolet irradiation portion (159(a), 159(b)) configured to cure the correction aid ink ejected from the recording portion (15) through ultraviolet irradiation; and

an ultraviolet irradiation control portion (249) configured to control the ultraviolet irradiation by the second ultraviolet irradiation portion (159(a), 159(b)), wherein,

when the correction aid ink is ejected into the correction execution area (AD1, AD4), the ultraviolet irradiation control portion (249) disables the second ultraviolet irradiation portion (159(a), 159(b)) from performing the ultraviolet irradiation or causes the second ultraviolet irradiation portion (159(a), 159(b)) to perform the ultraviolet irradiation at a reduced intensity.

13. The printing apparatus (10) according to claim 11, wherein,

the correction aid inkjet head (150(W), 150(E)) is capable of ejecting the correction aid ink in a plurality of droplet sizes, and

the ejection control portion (250) controls the ejection of the correction aid ink from the correction aid inkjet head (150(W), 150(E)) such that the droplet size of the correction aid ink ejected by the correction aid inkjet head (150(W), 150(E)) increases as a distance from an inkjet head corresponding to an ink ejected onto the correction aid ink in the correction execution area (AD1, AD4) among the plurality of types of inks other than the correction aid ink to the first ultraviolet irradiation portion (159(C)) decreases.

14. A printing method for forming a printed image on a printing medium (12) based on printing data using a printing apparatus (10) equipped with a recording portion configured to eject a plurality of types of inks onto the printing medium (12) and a transportation portion (13, 14, 17) configured to move the printing medium (12) relative to the recording portion (15), the method comprising:

ejecting one of the plurality of types of inks as a first ink from the recording portion (15) onto the printing medium (12) to form the printed image;

ejecting another one of the plurality of types of inks as a correction aid ink from the recording portion (15) onto the printing medium (12); and

determining a correction region (AC1-AC4) in the printed image to be formed on the printing medium (12), the correction region (AC1-AC4) consisting of one or more continuous areas to be corrected using the correction aid ink, wherein,

the transportation portion (13, 14, 17) includes a mechanism configured to move the printing medium (12) relative to the recording portion (15) in a predetermined transportation direction perpendicular to a width direction of the printing medium (12) and parallel to the printing medium (12),

the first ink has a larger wetting spread range on the printing medium (12) when the first ink is ejected onto the correction aid ink on the printing medium (12) than when the first ink is ejected directly onto the printing medium (12),

when any continuous area included in the correction region (AC1-AC4) contains more pixels in the transportation direction than twice a predetermined thinning number, in the determining the correction region (AC1-AC4), a correction execution area (AD1, AD4) for the any continuous area is determined by removing pixel rows corresponding to the thinning number from each of opposite ends of the any continuous area in the transportation direction, and

in the ejecting the correction aid ink, the correction aid ink is ejected into the correction execution area (AD1, AD4) before the first ink is ejected into the correction execution area (AD1, AD4) to form the printed image in the ejecting the first ink.

15. The printing method according to claim 14, wherein,

the recording portion (15) includes a first inkjet head (150(B), 150(O), 150(C), 150(M), 150(Y), 150(K)) including a plurality of ink ejection ports (152) for ejecting the first ink, and

in the determining the correction region (AC1-AC4), the correction region (AC1-AC4) is determined based on the printing data such that the correction region (AC1-AC4) includes a rectangular continuous area defined by a transportation direction range and a width direction range, the transportation direction range being determined by consecutive missing pixels in the transportation direction, the missing pixels being pixels that should have been formed on the printing medium (12) by ink ejected through a defective ink ejection port that is an ink ejection port having ejection failure among the plurality of ink ejection ports (152) in the first inkjet head (150(B), 150(O), 150(C), 150(M), 150(Y), 150(K)), the width direction range being determined by a predetermined number of adjacent pixels aligned in the width direction with a missing pixel centered.

## FIG. 1

Ink Jet Printing Apparatus

- - - 200
Print Controller

- - - 100
Printer Body

~10

4

Printing Data
Generation Device ~30

## FIG. 2

<u>10</u>

Printing Mechanism

16  15

17  14 14 14 14  13  12

18  11

Print Controller ~200

- - - 100

# FIG. 3

159 (c)

150 (K)

150 (Y)

150 (M)

150 (C)

150 (O)

150 (B)

159 (b)

150 (W)

159 (a)

150 (E)

Base Material Transportation Direction

FIG. 4

FIG. 5

## FIG. 6

*FIG. 7*

*FIG. 8*

(A)                                                    (B)

EP 4 617 071 A1

*FIG. 9*

FIG. 10

(A)

(B)

# FIG. 11

(A)

| C90/M10 | C90/M30 | C90/M50 |

(B)

| M90/C10 | M90/C30 | M90/C50 |

(C)

| C80/M10<br>Y10/K10 | C90/M10<br>Y40/K40 |

## FIG. 12

## FIG. 13

FIG. 14

SEI　　　　　　　　ZOH

製造

FIG. 15

Dot Missing                    Dot Missing

FIG. 16

FIG. 17

造

31 Pixels | 29 Pixels

AC1

AD1

2 Pixels

AC2

2 Pixels

AC3

4 Pixels | 2 Pixels

AC4

AD4

EP 4 617 071 A1

FIG. 18

## FIG. 19

EP 4 617 071 A1

## FIG. 20

Main Scanning Direction

Base Material Transportation Direction

64L  64  64R

## FIG. 21

## FIG. 22

FIG. 23

# FIG. 24

Main Scanning Direction

Base Material Transportation Direction

64L   64   64R

## *FIG. 25*

Main Scanning Direction

Base Material Transportation Direction

64L2    64

64L1    64R1

64R2

## FIG. 26

```
                    ( Start )
                        │
  S110    ┌─────────────────────────────┐
          │    Print Inspection Chart    │
          └─────────────────────────────┘
                        │
  S112    ┌─────────────────────────────┐
          │        Capture Image         │
          └─────────────────────────────┘
                        │
  S114    ┌─────────────────────────────┐
          │    Detect Defective Nozzle   │
          └─────────────────────────────┘
                        │
  S116    ┌─────────────────────────────┐
          │ Calculate Corretion Coefficient │
          └─────────────────────────────┘
                        │
  S118    ┌─────────────────────────────┐
          │  Determine Base Material Type │
          └─────────────────────────────┘
                        │
  S120    ◇ White Base Material ? ◇─────── No ──────┐
                        │ Yes                        │
  S121    ◇ White Correction Needed ? ◇── No ──┼── No ──◇ Transparent Correction Needed ? ◇
                        │ Yes                   │                      │ Yes
  S122    ┌─────────────────────────┐     │     S142 ┌────────────────────────────────────┐
          │        Specify          │     │          │             Specify                 │
          │ White Correction Target │     │          │  Transparent Correction Target Nozzle│
          │        Nozzle           │     │          └────────────────────────────────────┘
          └─────────────────────────┘     │                      │
                        │                  │     S143 ┌────────────────────────────────────┐
  S123    ┌─────────────────────────┐     │          │           Determine                 │
          │        Determine        │     │          │    Correction Execution Area        │
          │ Correction Execution Area│    │          │    By End Thinning Process           │
          │  By End Thinning Process │    │          └────────────────────────────────────┘
          └─────────────────────────┘     │                      │
                        │                  │     S144 ┌────────────────────────────────────┐
  S124    ┌─────────────────────────┐     │          │           Generate                  │
          │        Generate         │     │          │ Entire Transparent Correction Pattern│
          │ Entire White Correction │     │          └────────────────────────────────────┘
          │        Pattern          │     │                      │
          └─────────────────────────┘     │     S146 ┌────────────────────────────────────┐
                        │                  │          │            Enable                   │
  S126    ┌─────────────────────────┐     │          │  UV-LED  Array  Off-Setting          │
          │          Enable         │     │          │  For Tranparent Inkjet Head          │
          │  UV-LED Array Off-Setting│    │          └────────────────────────────────────┘
          │   For White Inkjet Head │     │                      │
          └─────────────────────────┘     │     S148 ┌────────────────────────────────────┐
                        │                  │          │   Density Correction Involving       │
  S128    ┌─────────────────────────┐     │          │     Transparent Correction           │
          │ Density Correction Involving│  │          └────────────────────────────────────┘
          │     White Correction     │    │                      │
          └─────────────────────────┘     │                      │
                        │          S130 ┌────────────────────────────────────┐
                        │               │   Density Correction Without        │
                        │               │ White and Transparent Corrections   │
                        │               └────────────────────────────────────┘
                        │                      │
                    ( End )
```

FIG. 27

EP 4 617 071 A1

## FIG. 28

```
                    ┌──────────────┐
                    │    Start      │
                    └──────────────┘
                            │
S110    ┌───────────────────────────────────────┐
        │       Print  Inspection  Chart         │
        └───────────────────────────────────────┘
                            │
S112    ┌───────────────────────────────────────┐
        │            Capture  Image              │
        └───────────────────────────────────────┘
                            │
S114    ┌───────────────────────────────────────┐
        │         Detect  Defective  Nozzle      │
        └───────────────────────────────────────┘
                            │
S116    ┌───────────────────────────────────────┐
        │      Calculate  Corretion  Coefficient │
        └───────────────────────────────────────┘
                            │
S121          ╱─────────────────────────────╲        No
              ╲  White Correction Needed ?  ╱──────────────┐
               ╲───────────────────────────╱              │
                            │ Yes                          │
S122    ┌───────────────────────────────────────┐         │
        │              Specify                   │         │
        │     White Correction Target Nozzle     │         │
        └───────────────────────────────────────┘         │
                            │                              │
S123    ┌───────────────────────────────────────┐         │
        │            Determine                   │         │
        │     Correction  Execution  Area        │         │
        │      By  End  Thinning  Process        │         │
        └───────────────────────────────────────┘         │
                            │                              │
S124    ┌───────────────────────────────────────┐         │
        │             Generate                   │         │
        │    Entire  White  Correction  Pattern  │         │
        └───────────────────────────────────────┘         │
                            │                              │
S126    ┌───────────────────────────────────────┐         │
        │              Enable                    │         │
        │     UV-LED  Array  Off-Setting         │         │
        │       For  White  Inkjet  Head         │         │
        └───────────────────────────────────────┘         │
                            │                              │
S128    ┌───────────────────────────┐   S130 ┌───────────────────────────┐
        │ Density  Correction Involving│     │ Density  Correction Without│
        │      White  Correction      │      │      White  Correction     │
        └───────────────────────────┘        └───────────────────────────┘
                            │                              │
                            └──────────────◄───────────────┘
                            │
                    ┌──────────────┐
                    │     End       │
                    └──────────────┘
```

## FIG. 29

Correction Coefficient Calculation Portion 241

Defective Nozzle Detection Portion 242

Inkjet Head 150

UV-LED 159 (b)

Ink Ejection Control Portion 250

First Correction Process Segment 2501

Third Correction Process Segment 2503

Transparent Correction Determination Portion 245b

Transparent Correction Target Nozzle Specification Portion 246b

Transparent Correction End Processing Portion 247b

Transparent Correction Pattern Generation Portion 248b

Printing Data Holding Portion 244

UV-LED Setting Portion 249

EP 4 617 071 A1

## FIG. 30

```
                        ┌─────────────┐
                        │    Start     │
                        └──────┬──────┘
                               ▼
S110  ┌────────────────────────────────────────┐
      │          Print  Inspection  Chart        │
      └────────────────────┬───────────────────┘
                           ▼
S112  ┌────────────────────────────────────────┐
      │              Capture  Image              │
      └────────────────────┬───────────────────┘
                           ▼
S114  ┌────────────────────────────────────────┐
      │          Detect  Defective  Nozzle       │
      └────────────────────┬───────────────────┘
                           ▼
S116  ┌────────────────────────────────────────┐
      │       Calculate  Corretion  Coefficient  │
      └────────────────────┬───────────────────┘
                           ▼
S141            ◇ Transparent Correction Needed ? ◇────── No ──┐
                           │                                     │
                          Yes                                    │
                           ▼                                     │
S142  ┌────────────────────────────────────────┐               │
      │               Specify                    │               │
      │    Transparent  Correction  Target  Nozzle│              │
      └────────────────────┬───────────────────┘               │
                           ▼                                     │
S143  ┌────────────────────────────────────────┐               │
      │              Determine                   │               │
      │      Correction  Execution  Area         │               │
      │        By  End  Thinning  Process        │               │
      └────────────────────┬───────────────────┘               │
                           ▼                                     │
S144  ┌────────────────────────────────────────┐               │
      │               Generate                   │               │
      │    Entire Transparent Correction Pattern │               │
      └────────────────────┬───────────────────┘               │
                           ▼                                     │
S146  ┌────────────────────────────────────────┐               │
      │                Enable                    │               │
      │       UV-LED  Array  Off-Setting         │               │
      │      For  Tranparent  Inkjet  Head       │               │
      └────────────────────┬───────────────────┘               ▼
S148  ┌────────────────────────────────┐  S130 ┌────────────────────────────────┐
      │   Density  Correction  Involving │       │  Density  Correction  Without   │
      │      Transparent  Correction     │       │     Transparent  Correction     │
      └────────────────┬───────────────┘       └────────────────┬───────────────┘
                       ▼◄──────────────────────────────────────┘
                ┌─────────────┐
                │     End      │
                └─────────────┘
```

FIG. 31

FIG. 32

# FIG. 33

91

| 50 | 50 | 50 | 50 | 50 |

9(1)   9(3)   9(5)
9(2)   9(4)

↓ Density Uniformity Correction

92

| 40 | 50 | 40 | 60 | 30 |

9(1)   9(3)   9(5)
9(2)   9(4)

↓ Nozzle-Defect Correction

93

| 40 | 50 / 20 | 0 | 60 / 20 | 30 |

9(1)   9(3)   9(5)
9(2)   9(4)

**Europäisches Patentamt**
**European Patent Office**
**Office européen des brevets**

# EUROPEAN SEARCH REPORT

**Application Number**

EP 25 15 9399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/268034 A1 (LEE IN-SU [KR] ET AL) 30 November 2006 (2006-11-30) * figures 3, 7, 18, 20 * * paragraph [0026] * * paragraph [0064] * * paragraph [0077] * ----- | 1-15 | INV. B41J2/21 G06K15/02 |
| A | US 2002/054180 A1 (SHIBATA TSUYOSHIA [JP] ET AL) 9 May 2002 (2002-05-09) * figures 11-12 * * paragraph [0093] - paragraph [0112] * ----- | 1-15 | |
| A | US 2019/275790 A1 (NAKAZAWA YUKI [JP] ET AL) 12 September 2019 (2019-09-12) * figures 1-5 * * paragraph [0020] * * paragraph [0027] - paragraph [0028] * * paragraph [0035] - paragraph [0037] * ----- | 1-15 | |

| | |
|---|---|
| | **TECHNICAL FIELDS SEARCHED (IPC)** |
| | B41J G06M G06K |

The present search report has been drawn up for all claims

| Place of search | Date of completion of the search | Examiner |
|---|---|---|
| The Hague | 17 July 2025 | João, César |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9399

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | Publication date | Patent family member(s) | Publication date |
|---|---|---|---|
| US 2006268034 A1 | 30-11-2006 | KR 20060122181 A<br>US 2006268034 A1 | 30-11-2006<br>30-11-2006 |
| US 2002054180 A1 | 09-05-2002 | JP 4616975 B2<br>JP 2002067297 A<br>US 2002054180 A1 | 19-01-2011<br>05-03-2002<br>09-05-2002 |
| US 2019275790 A1 | 12-09-2019 | JP 7052431 B2<br>JP 2019155593 A<br>US 2019275790 A1 | 12-04-2022<br>19-09-2019<br>12-09-2019 |

EPO FORM P0459

For more details about this annex : see Official Journal of the European Patent Office, No. 12/82

**REFERENCES CITED IN THE DESCRIPTION**

**Patent documents cited in the description**

- JP 2014188785 A
- JP 2019155593 A